# EUROPEAN PATENT APPLICATION

(11) **EP 1 276 327 A2**
(43) Date of publication of application: **15.01.2003**
(21) Application number: 02254793.9
(22) Date of filing: 09.07.2002
(51) Int. Cl.: H04N 7/24

(54) **Method for processing structured metadata**

(30) Priority: 09.07.2001 JP 2001207457; 24.07.2001 JP 2001222745
(71) Applicant: Victor Company of Japan, Ltd., Yokohama 221-0022 (JP)
(72) Inventor: Azami, Tomohiro, Yokosuka-shi, Kanagawa-ken (JP); Ando, Ichiro, Yokosuka-shi, Kanagawa-ken (JP)
(74) Representative: Senior, Alan Murray

(57) **Abstract**

A first unit includes a first metadata store portion and a connection destination information store portion. The first metadata store portion contains first structured metadata. The connection destination information store portion contains connection position information and reference information. The connection position information represents a connection point in the first structured metadata to which second structured metadata should be connected. The reference information relates to the second structured metadata and includes information relating to a place where the second structured metadata exist. A second unit includes a second metadata store portion containing the second structured metadata. The first structured metadata and the second structured metadata are integrated into third structured metadata of a tree structure in response to the connection position information and the reference information contained in the connection destination information store portion of the first unit.

## Description

This invention relates to a method of integrating structured metadata. In addition, this invention relates to a method of transmitting structured metadata. Furthermore, this invention relates to a method of dividing structured metadata.

Structured metadata can be designed to describe audio-visual contents transmitted in digital television broadcast. The MPEG-7 standards relate to structured metadata of a tree structure which describe audio-visual contents. The tree-structure metadata result from temporally and spatially structuring data representative of the audio-visual contents.

A typical MPEG-7 description includes descriptors D and description schemes DS. The descriptors D are used for describing the features of contents. A description scheme DS is able to have descriptors D and lower-rank description schemes DS as elements thereof. Therefore, a description scheme DS corresponds to a descriptor group. The description definition language (DDL) prescribes the syntax for descriptors D and description schemes DS.

The format of an MPEG-7 description uses the extensible markup language (XML). The DDL results from adding, to the XML schema, an extension peculiar to the MPEG-7 system.

Structured metadata of a tree structure which describe audio-visual contents enable a high-speed and efficient search for a desired content.

According to the MPEG-7 standards, an MPEG-7 description consists of only one document. Thus, an MPEG-7 description representing audio-visual contents transmitted in one channel of digital television broadcast for a day has a huge document. The efficiency of the transmission of such a huge document tends to be low.

It is a first object of this invention to provide a method of integrating structured metadata.

It is a second object of this invention to provide a method of transmitting structured metadata. It is a third object of this invention to provide a method of dividing structured metadata.

A first aspect of this invention provides a method of integrating structured metadata. The method comprises the steps of using a first unit including a first metadata store portion and a connection destination information store portion, the first metadata store portion containing first structured metadata, the connection destination information store portion containing connection position information and reference information, the connection position information representing a connection point in the first structured metadata to which second structured metadata should be connected, the reference information relating to the second structured metadata and including information relating to a place where the second structured metadata exist; using a second unit including a second metadata store portion containing the second structured metadata; and integrating the first structured metadata and the second structured metadata into third structured metadata of a tree structure in response to the connection position information and the reference information contained in the connection destination information store portion of the first unit.

A second aspect of this invention is based on the first aspect thereof, and provides a method wherein the connection position information includes information designating a node in the first structured metadata, and information designating a connection position of the second structured metadata with respect to the designated node.

A third aspect of this invention is based on the first aspect thereof, and provides a method wherein the reference information includes information relating to a content of the second structured metadata.

A fourth aspect of this invention is based on the third aspect thereof, and provides a method further comprising the step of deciding whether or not the first structured metadata and the second structured metadata should be integrated in response to the information relating to the content of the second structured metadata.

A fifth aspect of this invention is based on the first aspect thereof, and provides a method wherein the reference information includes information representing a necessity of integration with the first structured metadata.

A sixth aspect of this invention is based on the fifth aspect thereof, and provides a method further comprising the step of deciding whether or not the first structured metadata and the second structured metadata should be integrated in response to the information representing the necessity of integration with the first structured metadata.

A seventh aspect of this invention is based on the first aspect thereof, and provides a method wherein first and second identification information pieces for identifying the first and second units are added to the first and second units, respectively.

An eighth aspect of this invention is based on the seventh aspect thereof, and provides a method wherein the information relating to the place where the second structured metadata exist is based on the second identification information piece for identifying the second unit.

A ninth aspect of this invention is based on the first aspect thereof, and provides a method wherein the first structured metadata, the second structured metadata, the connection position information, and the reference information are of a textual format.

A tenth aspect of this invention is based on the seventh aspect thereof, and provides a method wherein the first and second identification information pieces, the first structured metadata, the second structured metadata, the connection position information, and the reference information are of a textual format.

An eleventh aspect of this invention is based on the first aspect thereof, and provides a method wherein the first structured metadata, the second structured metadata, the connection position information, and the reference information are of a binary format.

A twelfth aspect of this invention is based on the seventh aspect thereof, and provides a method wherein the first and second identification information pieces, the first structured metadata, the second structured metadata, the connection position information, and the reference information are of a binary format.

A thirteenth aspect of this invention is based on the first aspect thereof, and provides a method wherein the third structured metadata represent an electronic program guide.

A fourteenth aspect of this invention is based on the first aspect thereof, and provides a method wherein the connection position information includes name information relating to a name of a node in an assumptive integration-resultant structured metadata which corresponds to an uppermost node in the second structured metadata.

A fifteenth aspect of this invention is based on the fourteenth aspect thereof, and provides a method further comprising the step of converting a name of the uppermost node in the second structured metadata into the name of the node in the assumptive integration-resultant structured metadata before the first structured metadata and the second structured metadata are integrated.

A sixteenth aspect of this invention provides a method of integrating structured metadata. The method comprises the steps of using a first unit including a first metadata store portion and a connection destination information store portion, the first metadata store portion containing first structured metadata, the connection destination information store portion containing first connection position information and first reference information, the first connection position information representing a first connection point in the first structured metadata to which second structured metadata should be connected, the first reference information relating to the second structured metadata and including information relating to a place where the second structured metadata exist, the connection destination information store portion containing second connection position information and second reference information, the second connection position information representing a second connection point in the first structured metadata to which third structured metadata should be connected, the second reference information relating to the third structured metadata and including information relating to a place where the third structured metadata exist, the connection destination information store portion containing at least one of (1) first common information and (2) second common information as common attribute information, the first common information being common to the first connection position information and the second connection position information, the second common information being common to the first reference information and the second reference information; using at least one of second and third units, the second unit including a second metadata store portion containing either the second structured metadata or a set of the second structured metadata and the third structured metadata, the third unit including a third metadata store portion containing the third structured metadata; and integrating the first structured metadata, the second structured metadata, and the third structured metadata into fourth structured metadata of a tree structure in response to the common attribute information contained in the connection destination information store portion of the first unit.

A seventeenth aspect of this invention is based on the sixteenth aspect thereof, and provides a method further comprising the step of using the common attribute information in preference to the first connection position information, the first reference information, the second connection position information, and the second reference information for the integration of the first structured metadata, the second structured metadata, and the third structured metadata.

An eighteenth aspect of this invention provides a method of integrating structured metadata. The method comprises the steps of using a first unit including a first metadata store portion and a connection destination information store portion, the first metadata store portion containing first structured metadata, the connection destination information store portion containing connection position information and reference information, the connection position information representing a node in an assumptive integration-resultant structured metadata which corresponds to an uppermost node in second structured metadata, the reference information relating to the second structured metadata and including information relating to a place where the second structured metadata exist; using a second unit including a second metadata store portion containing the second structured metadata; and integrating the first structured metadata and the second structured metadata into third structured metadata of a tree structure in response to the connection position information and the reference information contained in the connection destination information store portion of the first unit.

A nineteenth aspect of this invention is based on the eighteenth aspect thereof, and provides a method wherein the reference information includes information relating to a content of the second structured metadata.

A twentieth aspect of this invention is based on the nineteenth aspect thereof, and provides a method further comprising the step of deciding whether or not the first structured metadata and the second structured metadata should be integrated in response to the information relating to the content of the second structured metadata.

A twenty-first aspect of this invention is based on the eighteenth aspect thereof, and provides a method wherein the reference information includes information representing a necessity of integration with the first structured metadata.

A twenty-second aspect of this invention is based on the twenty-first aspect thereof, and provides a method further comprising the step of deciding whether or not the first structured metadata and the second structured metadata should be integrated in response to the information representing the necessity of integration with the first structured metadata.

A twenty-third aspect of this invention is based on the eighteenth aspect thereof, and provides a method wherein first and second identification information pieces for identifying the first and second units are added to the first and second units, respectively.

A twenty-fourth aspect of this invention is based on the twenty-third aspect thereof, and provides a method wherein the information relating to the place where the second structured metadata exist is based on the second identification information piece for identifying the second unit.

A twenty-fifth aspect of this invention is based on the eighteenth aspect thereof, and provides a method wherein the first structured metadata, the second structured metadata, the connection position information, and the reference information are of a textual format.

A twenty-sixth aspect of this invention is based on the twenty-third aspect thereof, and provides a method wherein the first and second identification information pieces, the first structured metadata, the second structured metadata, the connection position information, and the reference information are of a textual format.

A twenty-seventh aspect of this invention is based on the eighteenth aspect thereof, and provides a method wherein the first structured metadata, the second structured metadata, the connection position information, and the reference information are of a binary format.

A twenty-eighth aspect of this invention is based on the twenty-third aspect thereof, and provides a method wherein the first and second identification information pieces, the first structured metadata, the second structured metadata, the connection position information, and the reference information are of a binary format.

A twenty-ninth aspect of this invention is based on the eighteenth aspect thereof, and provides a method wherein the third structured metadata represent an electronic program guide.

A thirtieth aspect of this invention is based on the eighteenth aspect thereof, and provides a method wherein the connection position information includes name information relating to a name of the node in the assumptive integration-resultant structured metadata which corresponds to the uppermost node in the second structured metadata.

A thirty-first aspect of this invention is based on the thirtieth aspect thereof, and provides a method further comprising the step of converting a name of the uppermost node in the second structured metadata into the name of the node in the assumptive integration-resultant structured metadata before the first structured metadata and the second structured metadata are integrated.

A thirty-second aspect of this invention provides a method of integrating structured metadata. The method comprises the steps of using a first unit including a first metadata store portion and a connection destination information store portion, the first metadata store portion containing first structured metadata, the connection destination information store portion containing first connection position information and first reference information, the first connection position information representing a first node in an assumptive integration-resultant structured metadata which corresponds to an uppermost node in second structured metadata, the first reference information relating to the second structured metadata and including information relating to a place where the second structured metadata exist, the connection destination information store portion containing second connection position information and second reference information, the second connection position information representing a second node in the assumptive integration-resultant structured metadata which corresponds to an uppermost node in third structured metadata, the second reference information relating to the third structured metadata and including information relating to a place where the third structured metadata exist, the connection destination information store portion containing at least one of (1) first common information and (2) second common information as common attribute information, the first common information being common to the first connection position information and the second connection position information, the second common information being common to the first reference information and the second reference information; using at least one of second and third units, the second unit including a second metadata store portion containing either the second structured metadata or a set of the second structured metadata and the third structured metadata, the third unit including a third metadata store portion containing the third structured metadata; and integrating the first structured metadata, the second structured metadata, and the third structured metadata into fourth structured metadata of a tree structure in response to the common attribute information contained in the connection destination information store portion of the first unit.

A thirty-third aspect of this invention is based on the thirty-second aspect thereof, and provides a method further comprising the step of using the common attribute information in preference to the first connection position information, the first reference information, the second connection position information, and the second reference information for the integration of the first structured metadata, the second structured metadata, and the third structured metadata.

A thirty-fourth aspect of this invention provides a method of transmitting structured metadata. The method comprises the steps of using a first unit including a first metadata store portion and a connection destination information store portion, the first metadata store portion containing first structured metadata, the connection destination information store portion containing connection position information and reference information, the connection position information representing a connection point in the first structured metadata to which second structured metadata should be connected, the second structured metadata being subordinate to the first structured metadata, the reference information relating to the second structured metadata and including information relating to a place where the second structured metadata exist, the first unit containing first identification information for identifying the first unit; using a second unit including a second metadata store portion containing the second structured metadata, the second unit containing second identification information for identifying the second unit; and transmitting the first and second units.

A thirty-fifth aspect of this invention is based on the thirty-fourth aspect thereof, and provides a method further comprising the step of controlling the transmission of the first and second units on a unit-by-unit basis.

A thirty-sixth aspect of this invention is based on the thirty-fourth aspect thereof, and provides a method wherein the first structured metadata and the second structured metadata compose third structured metadata being of a tree structure and representing an electronic program guide.

A thirty-seventh aspect of this invention is based on the thirty-fourth aspect thereof, and provides a method wherein the first structured metadata and the second structured metadata result from dividing original structured metadata, and the connection position information includes name information relating to a name of a node in the original structured metadata which corresponds to an uppermost node in the second structured metadata.

A thirty-eighth aspect of this invention is based on the thirty-fourth aspect thereof, and provides a method wherein the connection position information includes name information relating to a name of a node in an assumptive integration-resultant structured metadata which corresponds to an uppermost node in the second structured metadata.

A thirty-ninth aspect of this invention provides a method of transmitting first structured metadata and second structured metadata resulting from dividing original structured metadata. The second structured metadata are subordinate to the first structured metadata. The method comprises the steps of using a first unit including a first metadata store portion and a connection destination information store portion, the first metadata store portion containing the first structured metadata, the connection destination information store portion containing connection position information and reference information, the connection position information representing a node in the original structured metadata which corresponds to an uppermost node in the second structured metadata, the reference information relating to the second structured metadata and including information relating to a place where the second structured metadata exist; using a second unit including a second metadata store portion containing the second structured metadata; and transmitting the first and second units.

A fortieth aspect of this invention provides a method of transmitting structured metadata. The method comprises the steps of using a first unit including a first metadata store portion and a connection destination information store portion, the first metadata store portion containing first structured metadata, the connection destination information store portion containing connection position information and reference information, the connection position information representing a node in an assumptive integration-resultant structured metadata which corresponds to an uppermost node in second structured metadata, the second structured metadata being subordinate to the first structured metadata, the reference information relating to the second structured metadata and including information relating to a place where the second structured metadata exist; using a second unit including a second metadata store portion containing the second structured metadata; and transmitting the first and second units.

A forty-first aspect of this invention is based on the thirty-ninth aspect thereof, and provides a method wherein the connection position information includes name information relating to a name of the node in the original structured metadata which corresponds to the uppermost node in the second structured metadata.

A forty-second aspect of this invention is based on the fortieth aspect thereof, and provides a method wherein the connection position information includes name information relating to a name of the node in the assumptive integration-resultant structured metadata which corresponds to the uppermost node in the second structured metadata.

A forty-third aspect of this invention is based on the thirty-ninth aspect thereof, and provides a method further comprising the step of controlling the transmission of the first and second units on a unit-by-unit basis.

A forty-fourth aspect of this invention is based on the thirty-ninth aspect thereof, and provides a method wherein the first structured metadata and the second structured metadata compose third structured metadata being of a tree structure and representing an electronic program guide.

A forty-fifth aspect of this invention provides a method of dividing structured metadata. The method comprises the steps of dividing original structured metadata of a tree structure into first division-resultant structured metadata and second division-resultant structured metadata, the original structured metadata representing a content; generating a first unit including a first metadata store portion and a connection destination information store portion, the first metadata store portion containing the first division-resultant structured metadata, the connection destination information store portion containing connection position information and reference information, the connection position information representing a connection point in the first division-resultant structured metadata to which the second division-resultant structured metadata should be connected, the reference information relating to the second division-resultant structured metadata and including information relating to a place where the second division-resultant structured metadata exist; and generating a second unit including a second metadata store portion containing the second division-resultant structured metadata.

A forty-sixth aspect of this invention is based on the forty-fifth aspect thereof, and provides a method wherein the connection position information includes name information relating to a name of a node in the original structured metadata which corresponds to an uppermost node in the second division-resultant structured metadata.

A forty-seventh aspect of this invention provides a method of dividing structured metadata. The method comprises the steps of dividing original structured metadata of a tree structure into first division-resultant structured metadata, second division-resultant structured metadata, and third division-resultant structured metadata, the original structured metadata representing a content; generating a first unit including a first metadata store portion and a connection destination information store portion, the first metadata store portion containing the first division-resultant structured metadata, the connection destination information store portion containing first connection position information and first reference information, the first connection position information representing a first connection point in the first division-resultant structured metadata to which the second division-resultant structured metadata should be connected, the first reference information relating to the second division-resultant structured metadata and including information relating to a place where the second division-resultant structured metadata exist, the connection destination information store portion containing second connection position information and second reference information, the second connection position information representing a second connection point in the first division-resultant structured metadata to which the third division-resultant structured metadata should be connected, the second reference information relating to the third division-resultant structured metadata and including information relating to a place where the third division-resultant structured metadata exist, the connection destination information store portion containing at least one of (1) first common information and (2) second common information as common attribute information, the first common information being common to the first connection position information and the second connection position information, the second common information being common to the first reference information and the second reference information; and generating at least one of second and third units, the second unit including a second metadata store portion containing either the second division-resultant structured metadata or a set of the second division-resultant structured metadata and the third division-resultant structured metadata, the third unit including a third metadata store portion containing the third division-resultant structured metadata.

A forty-eighth aspect of this invention provides a method of dividing structured metadata. The method comprises the steps of dividing original structured metadata of a tree structure into first division-resultant structured metadata and second division-resultant structured metadata, the original structured metadata representing a content; generating a first unit including a first metadata store portion and a connection destination information store portion, the first metadata store portion containing the first division-resultant structured metadata, the connection destination information store portion containing connection position information and reference information, the connection position information representing a node in the original structured metadata which corresponds to an uppermost node in the second division-resultant structured metadata, the reference information relating to the second division-resultant structured metadata and including information relating to a place where the second division-resultant structured metadata exist; and generating a second unit including a second metadata store portion containing the second division-resultant structured metadata.

A forty-ninth aspect of this invention is based on the forty-eighth aspect thereof, and provides a method wherein the connection position information includes name information relating to a name of the node in the original structured metadata which corresponds to the uppermost node in the second division-resultant structured metadata.

A fiftieth aspect of this invention provides a method of dividing structured metadata. The method comprises the steps of dividing original structured metadata of a tree structure into first division-resultant structured metadata, second division-resultant structured metadata, and third division-resultant structured metadata, the original structured metadata representing a content; generating a first unit including a first metadata store portion and a connection destination information store portion, the first metadata store portion containing the first division-resultant structured metadata, the connection destination information store portion containing first connection position information and first reference information, the first connection position information representing a first node in the original structured metadata which corresponds to an uppermost node in the second division-resultant structured metadata, the first reference information relating to the second division-resultant structured metadata and including information relating to a place where the second division-resultant structured metadata exist, the connection destination information store portion containing second connection position information and second reference information, the second connection position information representing a second node in the original structured metadata which corresponds to an uppermost node in the third division-resultant structured metadata, the second reference information relating to the third division-resultant structured metadata and including information relating to a place where the third division-resultant structured metadata exist, the connection destination information store portion containing at least one of (1) first common information and (2) second common information as common attribute information, the first common information being common to the first connection position information and the second connection position information, the second common information being common to the first reference information and the second reference information; and generating at least one of second and third units, the second unit including a second metadata store portion containing either the second division-resultant structured metadata or a set of the second division-resultant structured metadata and the third division-resultant structured metadata, the third unit including a third metadata store portion containing the third division-resultant structured metadata.

A fifty-first aspect of this invention is based on the forty-fifth aspect thereof, and provides a method wherein the original structured metadata represent an electronic program guide.

Fig. 1 is a diagram of a division procedure and a store and transmission procedure in a first embodiment of this invention.

Fig. 2 is a diagram of the store and transmission procedure and a reconstruction procedure in the first embodiment of this invention.

Fig. 3 is a diagram of the structures of access units in the first embodiment of this invention.

Fig. 4 is a descriptive view showing an example of the DDL syntax of one access unit in Fig. 3.

Fig. 5 is a diagram of a first example of an upper-rank MPEG-7 description, a lower-rank MPEG-7 description, and connection between the upper-rank MPEG-7 description and the lower-rank MPEG-7 description in the first embodiment of this invention.

Fig. 6 is a diagram of a second example of an upper-rank MPEG-7 description, a lower-rank MPEG-7 description, and connection between the upper-rank MPEG-7 description and the lower-rank MPEG-7 description in the first embodiment of this invention.

Fig. 7 is a diagram of a third example of an upper-rank MPEG-7 description, a lower-rank MPEG-7 description, and connection between the upper-rank MPEG-7 description and the lower-rank MPEG-7 description in the first embodiment of this invention.

Fig. 8 is a diagram of a fourth example of an upper-rank MPEG-7 description, a lower-rank MPEG-7 description, and connection between the upper-rank MPEG-7 description and the lower-rank MPEG-7 description in the first embodiment of this invention.

Fig. 9 is a diagram of the structures of access units in a second embodiment of this invention.

Figs. 10 and 11 are a descriptive view showing an example of the DDL syntax of one access unit in Fig. 9.

Fig. 12 is a diagram of a first example of an upper-rank MPEG-7 description, a lower-rank MPEG-7 description, and connection between the upper-rank MPEG-7 description and the lower-rank MPEG-7 description in a third embodiment of this invention.

Fig. 13 is a diagram of a second example of an upper-rank MPEG-7 description, a lower-rank MPEG-7 description, and connection between the upper-rank MPEG-7 description and the lower-rank MPEG-7 description in the third embodiment of this invention.

Fig. 14 is a diagram of a binary format for an access unit in a fourth embodiment of this invention.

Fig. 15 is a diagram of a binary format for "Fragment reference" in Fig. 14.

Fig. 16 is a diagram of the structures of access units in a fifth embodiment of this invention.

Fig. 17 is a descriptive view showing an example of the DDL syntax of one access unit in Fig. 16.

Fig. 18 is a diagram of a binary format for an access unit in the fifth embodiment of this invention.

Fig. 19 is a diagram of a binary format for "Fragment Reference" in the fifth embodiment of this invention.

Fig. 20 is a diagram of a binary format for "Connection Point" in the fifth embodiment of this invention.

Fig. 21 is a diagram of a binary format for "Fragment Location" in the fifth embodiment of this invention.

Fig. 22 is a diagram of the structures of access units in a sixth embodiment of this invention.

Fig. 23 is a block diagram of an MPEG-7 transmission system according to a seventh embodiment of this invention.

Fig. 24 is a block diagram of an MPEG-7 reception system according to an eighth embodiment of this invention.

Fig. 25 is a diagram of a video contents search system according to a ninth embodiment of this invention.

Fig. 26 is a flowchart of an application program for a user-side computer in Fig. 25.

### First Embodiment

Original structured metadata being an original MPEG-7 description of a tree structure is separated or divided at an arbitrary position into upper-rank structured metadata and lower-rank structured metadata which mean upper-layer structured metadata and lower-layer structured metadata respectively. The position of the separation (the division) is also referred to as the separation point or the connection point. Connection position information representative of the separation point (the connection point) with the lower-rank structured metadata is added to the upper-rank structured metadata. In addition, reference information for designating the lower-rank structured metadata is added to the upper-rank structured metadata. The reference information includes at least information relating to the place where the lower-rank structured metadata exist.

The reference information may further include information relating to the contents of the lower-rank structured metadata and a way of processing the lower-rank structured metadata. In this case, the reference information can be used as a decision material for the processing of the lower-rank structured metadata by a user or an application program.

The lower-rank structured metadata and the upper-rank structured metadata are connected on the basis of the connection position information and the reference information to reconstruct the original structured metadata (the original MPEG-7 description of the tree structure). In other words, the lower-rank structured metadata and the upper-rank structured metadata are integrated into the original structured metadata on the basis of the connection position information and the reference information.

A method of processing an original MPEG-7 description (original structured metadata) of a tree structure includes a sequence of a division procedure, a store and transmission procedure, and a reconstruction procedure. The reconstruction procedure is also referred to as the integration procedure.

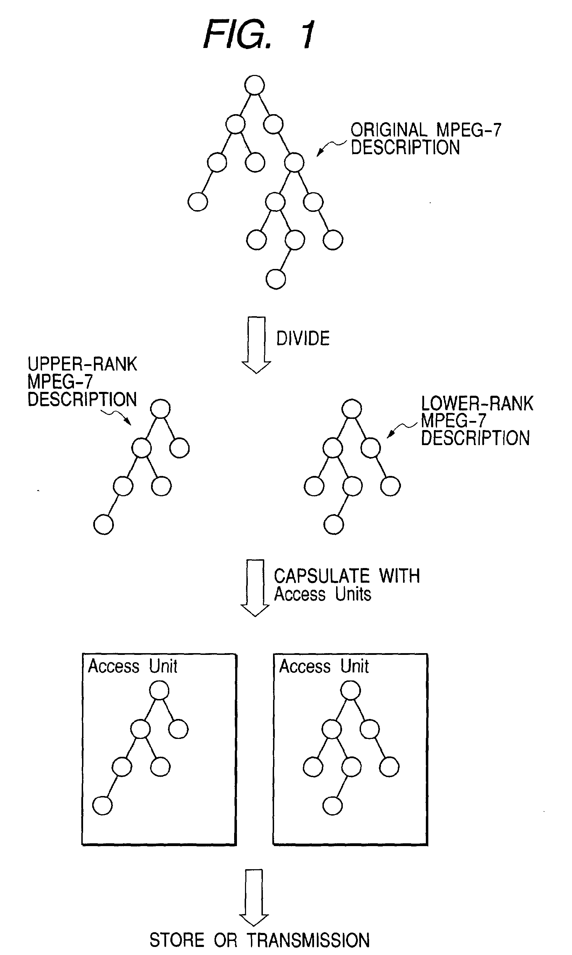

Fig. 1 shows the division procedure and the store and transmission procedure implemented by an encoding side including a computer which operates in accordance with a control program. The control program is designed to enable the encoding side to execute operation steps mentioned hereafter. With reference to Fig. 1, an original MPEG-7 description (original structured metadata) is divided into a plurality of division-resultant MPEG-7 descriptions (blocks of division-resultant structured metadata). The division-resultant MPEG-7 descriptions include an upper-rank MPEG-7 description and a lower-rank MPEG-7 description which mean an upper-layer MPEG-7 description and a lower-layer MPEG-7 description respectively. The division-resultant MPEG-7 descriptions are stored into the metadata store portions in access units, respectively. This step corresponds to capsulating the division-resultant MPEG-7 descriptions by the access units. Connection position information and reference information are generated in accordance with the conditions of dividing the original MPEG-7 description. The connection position information and the reference information are added to the access unit containing the upper-rank MPEG-7 description. The access units can be provided in and handled by a store system or a transmission system. Examples of the store system and the transmission system are as follows. In a store system for the Internet or another communication network, one or more access units in a file format are stored. In a transmission system such as a digital television broadcast system, access units are sequentially arranged to form a data stream, and the data stream is transmitted.

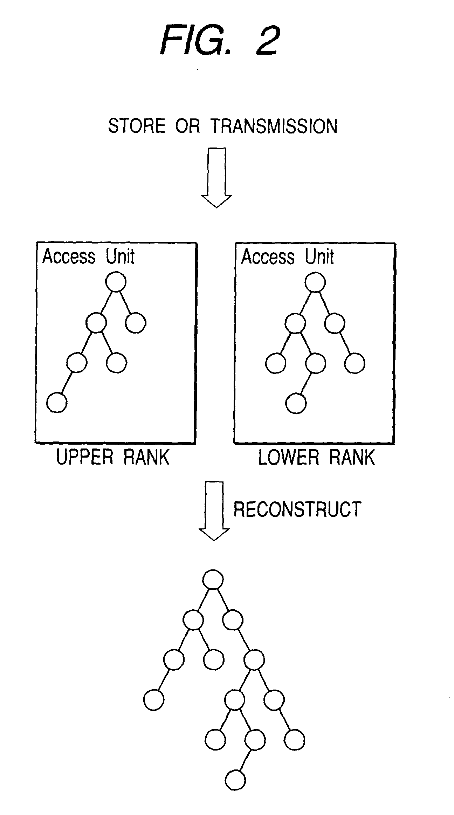

Fig. 2 shows the store and transmission procedure and the reconstruction procedure implemented by a decoding side including a computer which operates in accordance with a control program. The control program is designed to enable the decoding side to execute operation steps mentioned hereafter. With reference to Fig. 2, the access units are received from the store system or the transmission system. The division-resultant MPEG-7 descriptions are read from the metadata store portions in the access units. The connection position information and the reference information are read from the access unit containing the upper-rank MPEG-7 description. The division-resultant MPEG-7 descriptions are connected to reconstruct the original MPEG-7 description on the basis of the connection position information and the reference information. In other words, the division-resultant MPEG-7 descriptions are integrated into the original MPEG-7 description on the basis of the connection position information and the reference information.

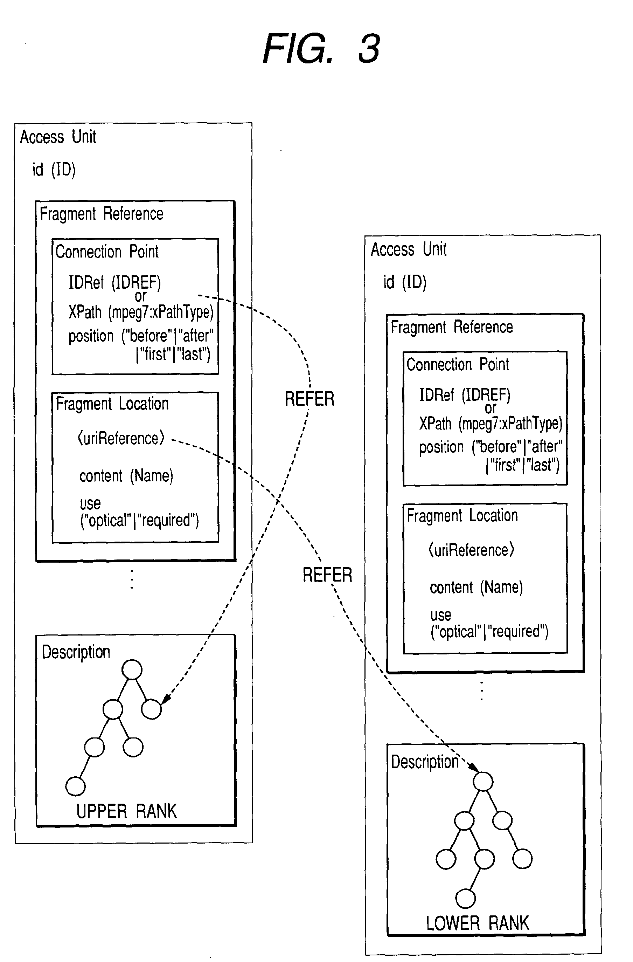

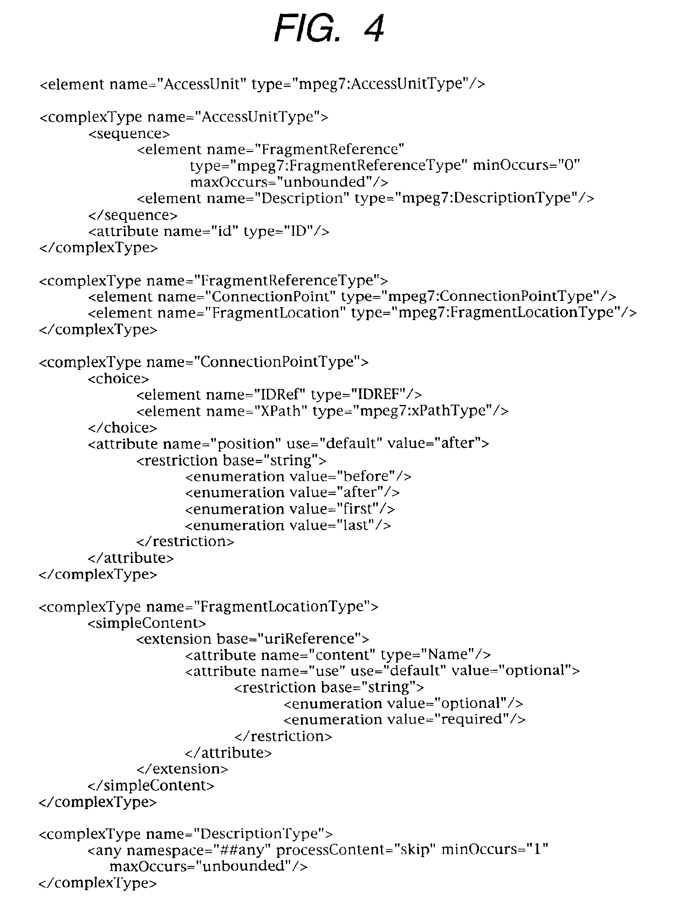

Fig. 3 shows examples of the structures of access units loaded with a division-resultant upper-rank MPEG-7 description and a division-resultant lower-rank MPEG-7 description respectively. Fig. 4 shows an example of the DDL (description definition language) syntax of one access unit in Fig. 3.

Each access unit in Fig. 3 includes a metadata store portion named "Description", a connection destination information store portion named "Fragment Reference", and an attribute "id (identification information)" store portion for containing a division-resultant MPEG-7 description and various types of information which are represented by text data. Generally, descriptions and information represented by text data have the following advantages. It is easy for a user to understand them. It is easy to edit them. Furthermore, they are suited for transmission via the Internet.

The Description stores the related division-resultant MPEG-7 description. Generally, there is only one Description in each access unit.

The Fragment Reference stores connection destination information which is referred to and used when the division-resultant MPEG-7 description in the related Description and the division-resultant MPEG-7 description of a rank lower than the rank of the former division-resultant MPEG-7 description are connected. The connection destination information includes connection position information and reference information.

Generally, in the case where there is a plurality of lower-rank MPEG-7 descriptions to be connected with an upper-rank MPEG-7 description stored in the Description of an access unit, Fragment References are provided in the access unit for the lower-rank MPEG-7 descriptions respectively. In the case where there is no lower-rank MPEG-7 description to be connected with an upper-rank MPEG-7 description stored in the Description of an access unit, Fragment Reference is absent from the access unit.

The Fragment Reference has two child elements named "Connection Point" and "Fragment Location" respectively.

The Connection Point is connection position information relating to an upper-rank MPEG-7 description stored in the related Description. The connection position information represents a place or a connection point in the upper-rank MPEG-7 description to which a lower-rank MPEG-7 description should be connected. The Connection Point uses a child element named "IDRef" or a child element named "XPath" in designating a specified node in the upper-rank MPEG-7 description. The child element "IDRef designates a specified node by use of ID (identification information) in the related MPEG-7 description. On the other hand, the child element "XPath" denotes a specified node in the related MPEG-7 description by use of the XML path language XPath (http://www. w3. org/TR/xpath) decided by W3C (World Wide Web Consortium).

The Connection Point includes "position (attribute position)" designating a position to which the lower-rank MPEG-7 description should be connected with respect to the node designated by the child element "IDRef" or "XPath". When the value of "position" corresponds to "before", the lower-rank MPEG-7 description is connected to a sibling position before the designated node. When the value of "position" corresponds to "after", the lower-rank MPEG-7 description is connected to a sibling position after the designated node. When the value of "position" corresponds to "first", the lower-rank MPEG-7 description is connected to the head of a child node or the head of a set of child nodes with respect to the designated node. When the value of "position" corresponds to "last", the lower-rank MPEG-7 description is connected to the end of a child node or the end of a set of child nodes with respect to the designated node.

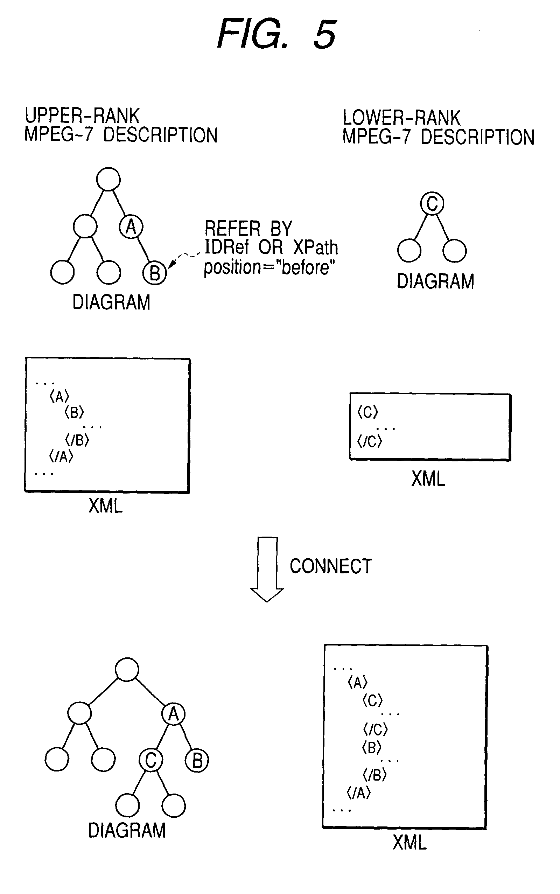

A way of using the attribute position ("position") will be explained below. Each of Figs. 5, 6, 7, and 8 has illustrations and actual XML description portions showing an upper-rank MPEG-7 description, a lower-rank MPEG-7 description, and a reconstructed MPEG-7 description resulting from connecting the upper-rank MPEG-7 description and the lower-rank MPEG-7 description.

In Fig. 5, a child element "IDRef" or "XPath" of Connection Point designates a node "B" in an upper-rank MPEG-7 description, and the value of an attribute position corresponds to "before". In this case, a lower-rank MPEG-7 description is connected to the upper-rank MPEG-7 description at a sibling position before the node "B". In Fig. 5, the sibling position before the node "B" means a position leftward of the node "B".

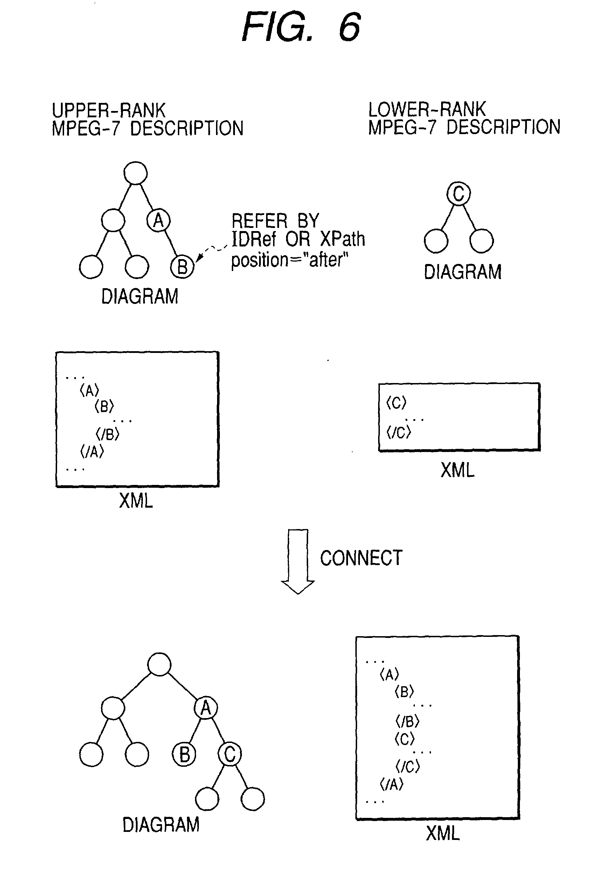

In Fig. 6, a child element "IDRef" or "XPath" of Connection Point designates a node "B" in an upper-rank MPEG-7 description, and the value of an attribute position corresponds to "after". In this case, a lower-rank MPEG-7 description is connected to the upper-rank MPEG-7 description at a sibling position after the node "B". In Fig. 6, the sibling position after the node "B" means a position rightward of the node "B".

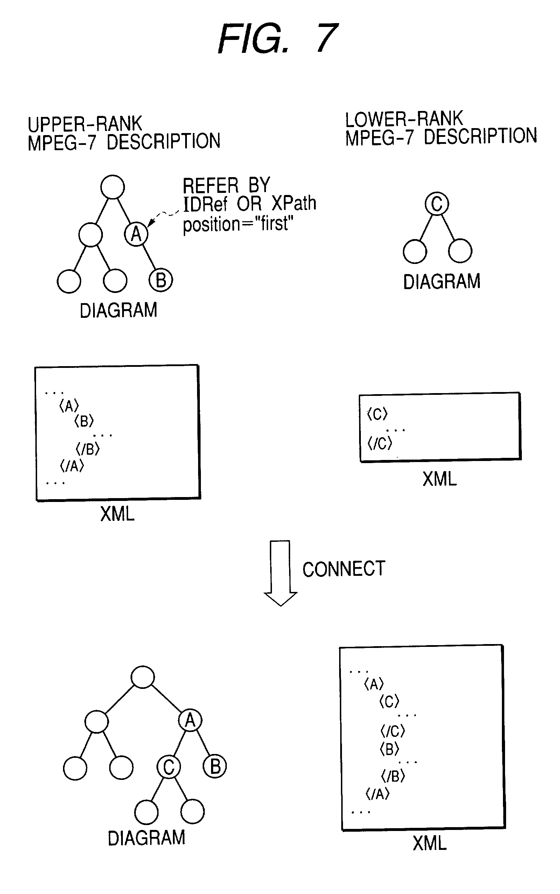

In Fig. 7, a child element "IDRef" or "XPath" of Connection Point designates a node "A" in an upper-rank MPEG-7 description, and the value of an attribute position corresponds to "first". In this case, a lower-rank MPEG-7 description is connected to the upper-rank MPEG-7 description at the head of a child element (a child node) with respect to the node "A", that is, at a sibling position before the node "B". In Fig. 7, the sibling position before the node "B" means a position leftward of the node "B".

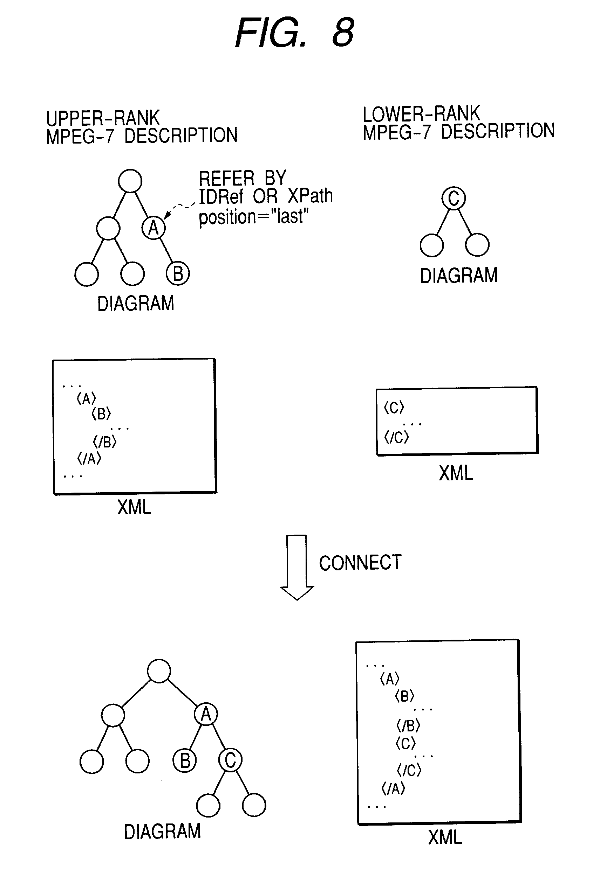

In Fig. 8, a child element "IDRef" or "XPath" of Connection Point designates a node "A" in an upper-rank MPEG-7 description, and the value of an attribute position corresponds to "last". In this case, a lower-rank MPEG-7 description is connected to the upper-rank MPEG-7 description at the end of a child element (a child node) with respect to the node "A", that is, at a sibling position after the node "B". In Fig. 8, the sibling position after the node "B" means a position rightward of the node "B".

With reference back to Fig. 3, the Fragment Location being a child element of the Fragment Reference is reference information designating a lower-rank MPEG-7 description which should be connected to the upper-rank MPEG-7 description in the related Description. The Fragment Location is of a data format being "uriReference", and refers to a root element of the lower-rank MPEG-7 description by URI (uniform resource identifiers). Thus, the Fragment Location represents the place where the lower-rank MPEG-7 description exists. The Fragment Location uses the XML pointer language XPointer (http://www. w3. org/TR/ptr) decided by W3C in addition to the URI, and thereby refers to a specified element in an external XML document.

The Fragment Location has "content (attribute content)" and "use (attribute use)". The attribute content gives an outline of the content of the lower-rank MPEG-7 description. The attribute content can employ, for example, the name of a root element of the lower-rank MPEG-7 description. A user or an application program can utilize the attribute content to selectively get and save a desired division-resultant MPEG-7 description or descriptions. The attribute use represents the necessity of the lower-rank MPEG-7 description for connection with the upper-rank MPEG-7 description. The default value of the attribute use is "optional". When the value of the attribute use is set to "required", it is mandatory that an MPEG-7 application program gets or saves the lower-rank MPEG-7 description. The protection of the copyright on the upper-rank MPEG-7 description can be strengthened by placing related copyright protection data in the lower-rank MPEG-7 description.

The attribute "id" store portion holds "id (attribute identification information)" for the related access unit, that is, the access-unit identification information. Generally, access units have "id" in different states respectively. Thus, the access units can be identified by referring to the states of "id" therein. In a store system for the Internet or another communication network, access units are stored in files, and can be identified by using URI. In a transmission system such as a digital television broadcast system, access units are sequentially arranged to form a data stream, and URI can not be used for access-unit identification. Even in the transmission system, the access units can be identified by referring to the states of "id" therein.

After access units are received or obtained from the store system or the transmission system, division-resultant MPEG-7 descriptions are read from the access units. In addition, information (connection position information and reference information) is read from the Fragment Reference, that is, the connection destination information store portion, of each of the access units. The division-resultant MPEG-7 descriptions are sequentially connected on the basis of the connection position information and the reference information to reconstruct an original MPEG-7 description. Thus, according to user's intention or an application program, access units are received or obtained, and division-resultant MPEG-7 descriptions are read from the received access units and are then connected to reconstruct an original MPEG-7 description on the basis of connection position information and reference information in the Fragment Reference which are in the direction from an upper-rank MPEG-7 description toward a lower-rank MPEG-7 description. Two or more may be selected from the access units on the basis of the reference information. In other words, two or more may be selected from the division-resultant MPEG-7 descriptions on the basis of the reference information. In this case, a portion of the original MPEG-7 description is reconstructed by connecting the selected division-resultant MPEG-7 descriptions. Accordingly, a user or an application program can select two or more from the division-resultant MPEG-7 descriptions by referring to the information in the Fragment Reference, and can reconstruct a portion of the original MPEG-7 description from the selected division-resultant MPEG-7 descriptions.

Access units loaded with division-resultant MPEG-7 descriptions can be transmitted. In this case, transmission control can be implemented access-unit by access-unit. Thus, it is possible to provide a high transmission efficiency.

As previously mentioned, connection position information and reference information composing information for connection are placed in the Fragment Reference, that is, the connection destination information store portion, of an access unit which is separate from the metadata store portion (Description) thereof. Accordingly, the addition of the information for connection can be implemented without operating the inner parts of structured metadata.

### Second Embodiment

A second embodiment of this invention is similar to the first embodiment thereof except design changes mentioned hereafter.

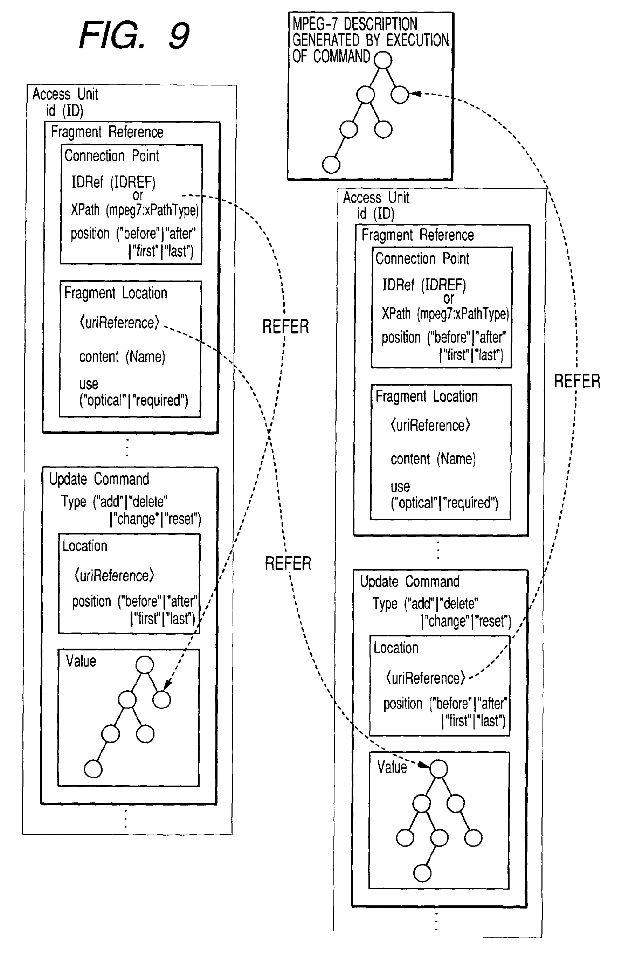

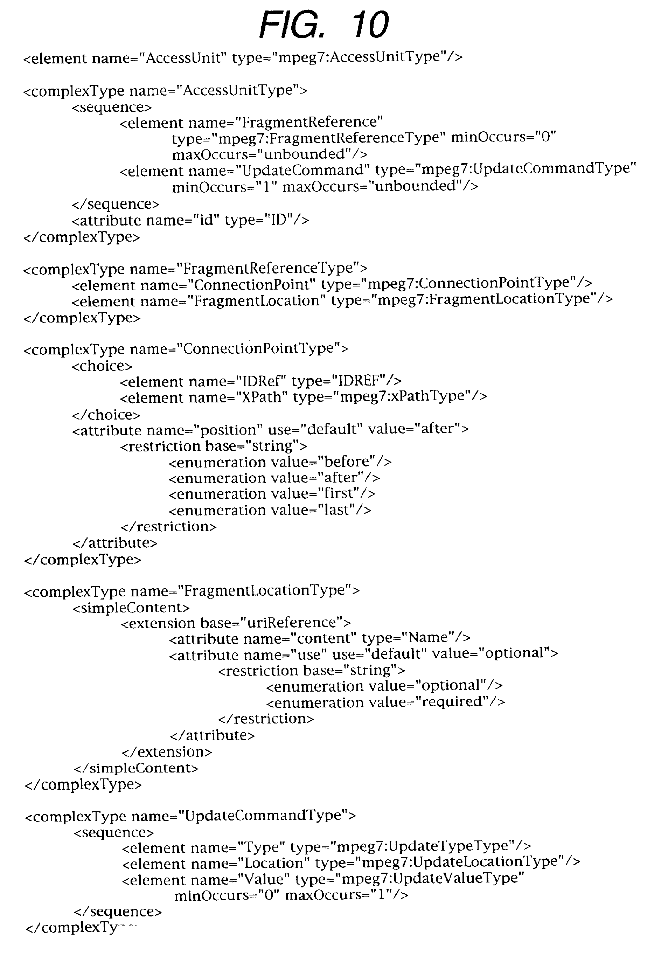

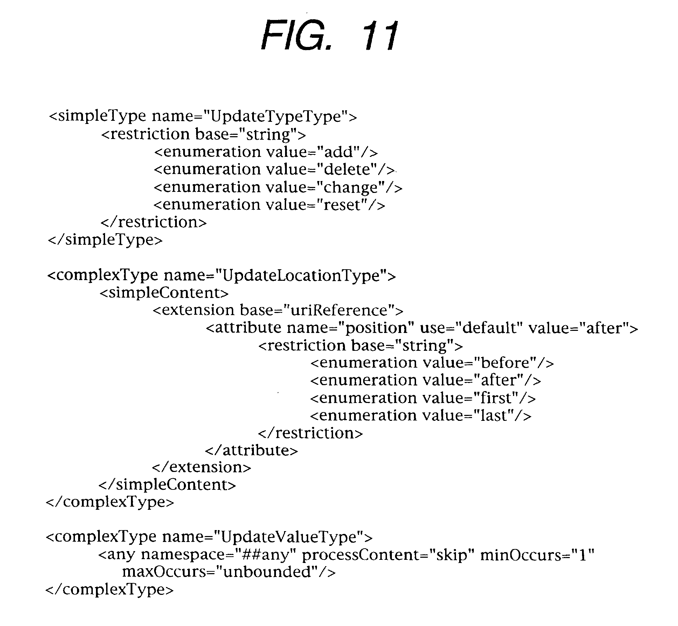

Fig. 9 shows examples of the structures of access units in the second embodiment of this invention which are loaded with division-resultant MPEG-7 descriptions respectively. Figs. 10 and 11 show an example of the DDL syntax of one access unit in Fig. 9.

Each access unit in Fig. 9 includes a connection destination information store portion named "Fragment Reference", a metadata-store-related portion named "Update Command", and an attribute "id (identification information)" store portion. The Update Command includes a metadata store portion.

The Fragment Reference is similar in structure to that in the first embodiment of this invention. Generally, a plurality of Fragment References can be in an access unit. Fragment Reference can be absent from an access unit.

The attribute "id" store portion is similar to that in the first embodiment of this invention. The Update Command forms or updates an MPEG-7 description by executing a command. The Update Command has three child elements named "Type", "Location", and "Value" respectively. Generally, one or more Update Commands exist in an access unit.

The Type in the Update Command represents the type of a command to be executed. The Type takes a value among four different values corresponding to "add", "delete", "change", and "reset" respectively. When the value of the Type corresponds to "add", an MPEG-7 description stored in the related Value is connected to a specified position in a subject MPEG-7 description which is represented by the related Location. When the value of the Type corresponds to "delete", a specified node and later nodes (lower nodes) are deleted from a subject MPEG-7 description. When the value of the Type corresponds to "change", a specified node in a subject MPEG-7 description which is represented by the related Location and also later nodes (lower nodes) therein are replaced by an MPEG-7 description stored in the related Value. When the value of the Type corresponds to "reset", a subject MPEG-7 description is returned to its predetermined initial state.

The Location in the Update Command is position information representing a place where a command is executed. The Location is of a data format being "uriReference", and refers to or designates a node to be exposed to command execution in a subject MPEG-7 description by the URI and the XML pointer language XPointer. The subject MPEG-7 description, that is, the MPEG-7 description which is referred to, has already been generated by previous command execution.

The Location includes "position (attribute position)". The attribute position is effective only when the value of the Type corresponds to "add". The attribute position designates a position to which an MPEG-7 description in the related "Value" should be connected with respect to the node referred to by the Location. When the value of the attribute position corresponds to "before", the MPEG-7 description is connected to a sibling position before the designated node. When the value of the attribute position corresponds to "after", the MPEG-7 description is connected to a sibling position after the designated node. When the value of the attribute position corresponds to "first", the MPEG-7 description is connected to the head of a child node or the head of a set of child nodes with respect to the designated node. When the value of the attribute position corresponds to "last", the MPEG-7 description is connected to the end of a child node or the end of a set of child nodes with respect to the designated node.

The Value in the Update Command is intended to store an MPEG-7 description (a division-resultant MPEG-7 description).

As previously mentioned, when the value of the Type in the Update Command corresponds to "add", an MPEG-7 description stored in the related Value is connected to a specified position in a subject MPEG-7 description which is represented by the related Location. Therefore, the Type being "add" causes connection of plural MPEG-7 descriptions to reconstruct an integrated MPEG-7 description. Thus, according to access-unit-group producer's or sender's intention, the reconstruction of an integrated MPEG-7 is implemented by using the reference information in the direction from a lower-rank MPEG-7 description toward an upper-rank MPEG-7 description. Furthermore, a producer or a sender for an original MPEG-7 description can control an integrated MPEG-7 description reconstructed in a user side.

### Third Embodiment

A third embodiment of this invention is similar to the first embodiment thereof except for design changes mentioned hereafter. In the third embodiment of this invention, the attribute position in the Connection Point takes one among only two values. The two values correspond to, for example, "before" and "last" ("beforeAsSibling" and "lastAsChild") respectively. The two values may correspond to "after" and "first" respectively.

The value of the attribute position which corresponds to "beforeAsSibling" means that the lower-rank MPEG-7 description designated by the related Fragment Location (the reference information relating to the lower-rank MPEG-7 description) should be connected to a position before the node designated by the Connection Point as a sibling. The value of the attribute position which corresponds to "lastAsChild" means that the lower-rank MPEG-7 description designated by the related Fragment Location should be connected to the end of a child node with respect to the node designated by the Connection Point.

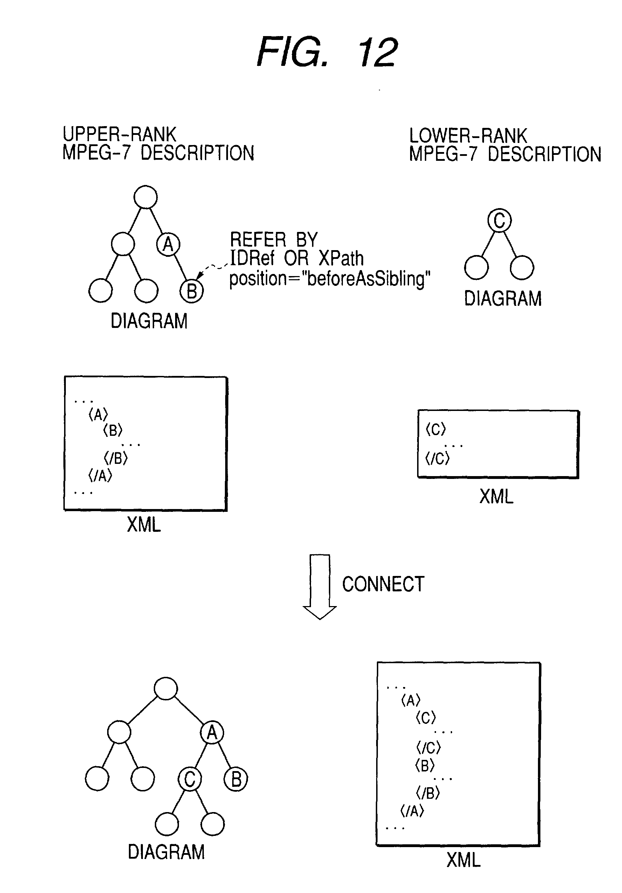

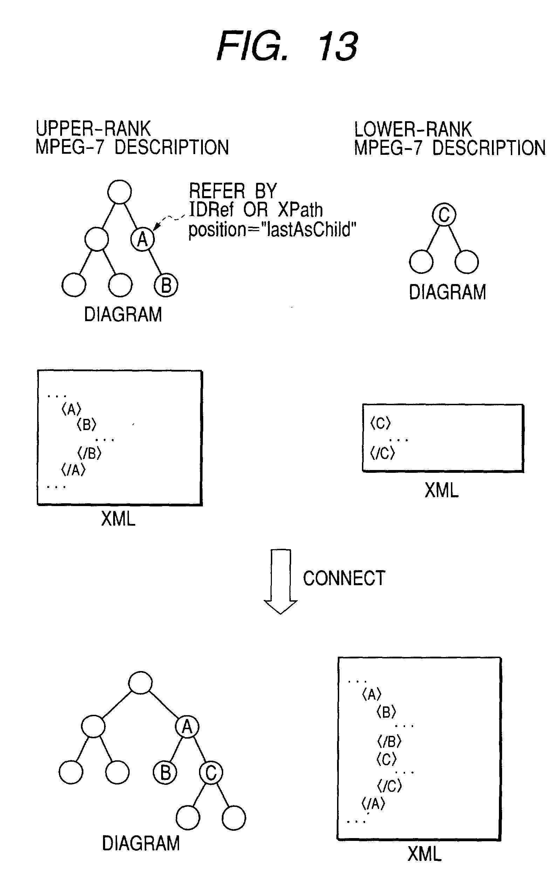

A way of using the attribute position will be explained below. Each of Figs. 12 and 13 has illustrations and actual XML description portions showing an upper-rank MPEG-7 description, a lower-rank MPEG-7 description, and a reconstructed MPEG-7 description resulting from connecting the upper-rank MPEG-7 description and the lower-rank MPEG-7 description.

In Fig. 12, a child element "IDRef" or "XPath" of Connection Point designates a node "B" in an upper-rank MPEG-7 description, and the value of an attribute position corresponds to "beforeAsSibling". In this case, a lower-rank MPEG-7 description is connected to the upper-rank MPEG-7 description at a sibling position before the node "B". In Fig. 12, the sibling position before the node "B" means a position leftward of the node "B".

In Fig. 13, a child element "IDRef" or "XPath" of Connection Point designates a node "A" in an upper-rank MPEG-7 description, and the value of an attribute position corresponds to "lastAsChild". In this case, a lower-rank MPEG-7 description is connected to the upper-rank MPEG-7 description at the end of a child element (a child node) with respect to the node "A", that is, at a sibling position after the node "B". In Fig. 13, the sibling position after the node "B" means a position rightward of the node "B".

The values of the attribute point which correspond to "beforeAsSibling" and "lastAsChild" can designate an arbitrary position as will be explained below. In the case where a certain node "A" does not have any child and a lower-rank MPEG-7 description is requested to be added as a child with respect to the node "A", the requested addition can be implemented by setting the Connection Point to designate the node "A" and setting the attribute point to "lastAsChild". In the case where a certain node "A" has a child and a lower-rank MPEG-7 description is requested to be added to a sibling position after the child, the requested addition can be implemented by setting the Connection Point to designate the node "A" and setting the attribute point to "lastAsChild". In the case where a certain node "A" has a child (a node "B") and a lower-rank MPEG-7 description is requested to be added to a sibling position before the child, the requested addition can be implemented by setting the Connection Point to designate the node "B" and setting the attribute point to "beforeAsSibling".

### Fourth Embodiment

A fourth embodiment of this invention is similar to one of the first, second, and third embodiments thereof except for design changes mentioned hereafter. The fourth embodiment of this invention is designed so that a division-resultant MPEG-7 description and various types of information in each access unit are represented by binary data. Generally, descriptions and information represented by binary data have the following advantages. They are smaller in volume than corresponding text-data descriptions and information, and are hence higher in transmission efficiency than the text-data descriptions and information. They are suited for digital television broadcast and distribution to mobile terminals.

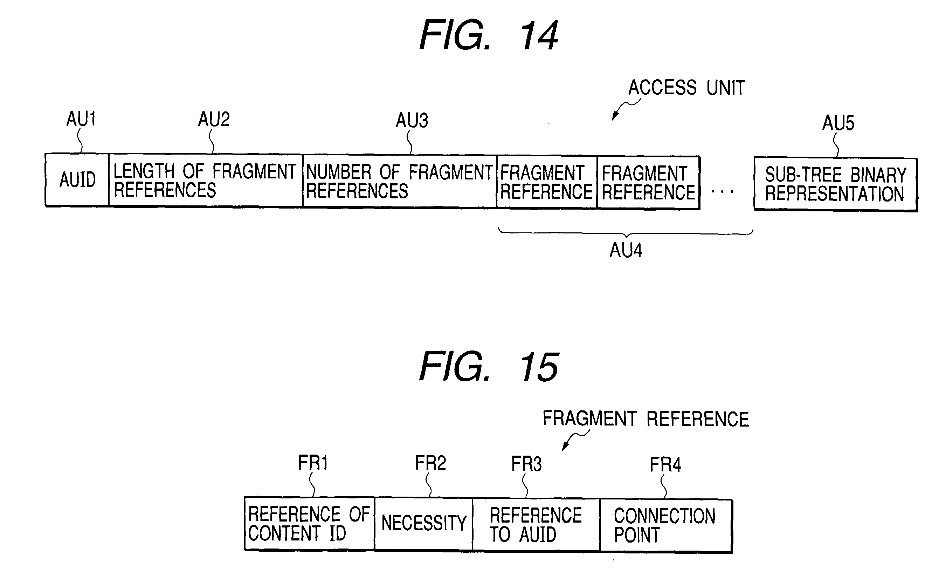

Fig. 14 shows a binary format for an access unit in the fourth embodiment of this invention. As shown in Fig. 14, the access unit has a sequence of portions AU1, AU2, AU3, AU4, and AU5 arranged in that order. The portion AU1 stores identification information AUID for identifying the present access unit. The portions AU2, AU3, and AU5 are named "Length of fragment references", "Number of fragment references", and "Sub-tree binary representation", respectively. The portion AU4 is divided into segments each named "Fragment reference".

The portion AU2, that is, "Length of fragment references", stores information which represents the length between the end of "Length of fragment references" and the head of "Sub-tree binary representation" in unit of bit number. The information in the portion AU2 enables "Sub-tree binary representation" to be accessed without decoding "Fragment references".

The portion AU3, that is, "Number of fragment references", stores information which represents the number of "Fragment references" in the portion AU4.

Each of "Fragment references" in the portion AU4 stores information for connection between upper-rank structured metadata and lower-rank structured metadata which is connection destination information composed of connection position information and reference information. Generally, a plurality of "Fragment references" can be provided in one access unit.

The portion AU5, that is, "Sub-tree binary representation", stores binary data representing structured metadata (a division-resultant MPEG-7 description). The binary data result from converting XML structured metadata by a binary encoding procedure such as "Binary XML Content Format Specification" prescribed by WAP (Wireless Application Protocol) Forum.

Fig. 15 shows a binary format for "Fragment reference". As shown in Fig. 15, "Fragment reference" has a sequence of portions FR1, FR2, FR3, and FR4 named "Reference of content ID", "Necessity", "Reference to AUID", and "Connection point" respectively.

The portion FR1, that is, "Reference of content ID", stores identification information for the type of the content of lower-rank structured metadata which should be referred to. Thus, the portion FR1 stores information relating to the content of the lower-rank structured metadata. Generally, the contents of structured metadata are previously classified into types to which different states of content identification information are assigned respectively.

The portion FR2, that is, "Necessity", has one bit representing the necessity of lower-rank structured metadata which should be referred to. Thus, the portion FR2 stores binary information representing the necessity of the connection of the lower-rank structured metadata with upper-rank structured metadata to generate integrated structured metadata. The bit in the portion FR2 which is "0" corresponds to "optional". The bit in the portion FR2 which is "1" corresponds to "mandatory".

The portion FR3, that is, "Reference to AUID", stores information for referring to lower-rank structured metadata by using the identification information AUID given to an access unit storing the lower-rank structured metadata. Thus, the portion FR3 stores information relating to a place where the lower-rank structured metadata exist.

The information in "Reference of content ID", the information in "Necessity", and the information in "Reference to AUID" compose reference information relating to the lower-rank structured metadata.

The portion FR4, that is, "Connection point", stores connection position information representing a point (a connection point) in upper-rank structured metadata in the related "Sub-tree binary representation" to which lower-rank structured metadata should be connected. For example, the connection position information uses "Xpath" to designate a node in the upper-rank structured metadata, and includes "position (attribute position)" designating a position to which the lower-rank structured metadata should be connected with respect to the designated node. It should be noted that "Xpath" and "position" may be replaced by binary data resulting from conversion of "Xpath" and "position" by a binary encoding procedure.

### Fifth Embodiment

A fifth embodiment of this invention is similar to the first embodiment thereof except design changes mentioned hereafter.

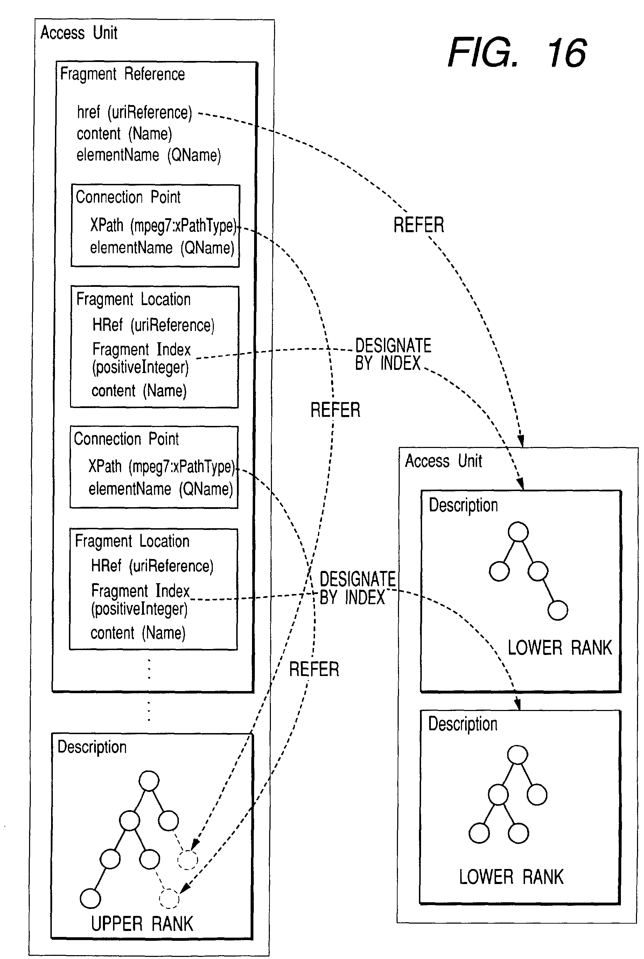

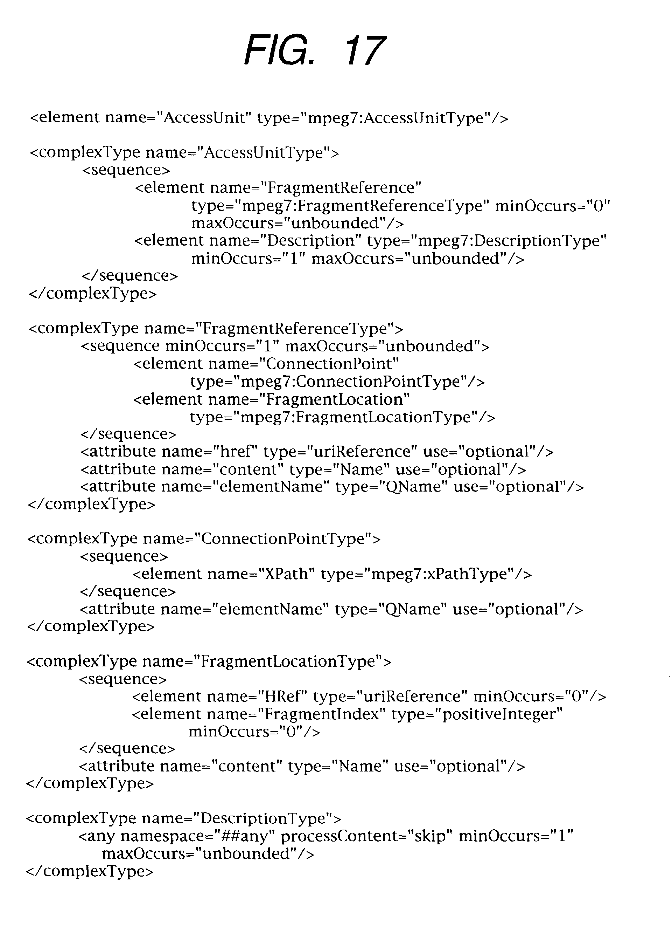

Fig. 16 shows examples of the structures of access units in the fifth embodiment of this invention which are loaded with division-resultant MPEG-7 descriptions. One access unit can store a plurality of division-resultant MPEG-7 descriptions. Fig. 17 shows an example of the DDL syntax of one access unit in Fig. 16.

With reference to Fig. 16, an original MPEG-7 description is divided into an upper-rank MPEG-7 description and two lower-rank MPEG-7 descriptions. The upper-rank MPEG-7 description is stored in one access unit referred to as an upper-rank access unit, and both the two lower-rank MPEG-7 descriptions are stored in another access unit referred to as a lower-rank access unit. The access unit storing the upper-rank MPEG-7 description can efficiently refer to the lower-rank MPEG-7 descriptions in the other access unit.

The upper-rank access unit in Fig. 16 includes a metadata store portion named "Description", and a connection destination information store portion named "Fragment Reference". The lower-rank access unit in Fig. 16 includes two Descriptions. Each Description stores a division-resultant MPEG-7 description. Generally, there is one or more Descriptions in each access unit.

The Fragment Reference stores connection destination information which is referred to and used when the division-resultant MPEG-7 description in the related Description and the division-resultant MPEG-7 descriptions of ranks lower than the rank of the former division-resultant MPEG-7 description are connected. The connection destination information includes connection position information and reference information.

The Fragment Reference has child elements of two types which are named "Connection Point" and "Fragment Location" respectively. Generally, the Fragment Reference has one or more sets each having Connection Point and Fragment Location, and each corresponding to one lower-rank MPEG-7 description to be connected with the division-resultant MPEG-7 description in the related Description. In Fig. 16, since the two lower-rank MPEG-7 descriptions exist, the Fragment Reference has two sets each having Connection Point and Fragment Location.

Generally, in the case where there is no lower-rank MPEG-7 description to be connected with an upper-rank MPEG-7 description stored in the Description of an access unit, Fragment Reference is absent from the access unit. A plurality of Fragment References may be provided in one access unit when lower-rank MPEG-7 descriptions are in certain conditions.

The Connection Point is connection position information relating to an upper-rank MPEG-7 description stored in the related Description. The connection position information represent a place or a connection point in the upper-rank MPEG-7 description to which a lower-rank MPEG-7 description should be connected. The Connection Point uses a child element named "XPath" in representing or designating a specified node in the original MPEG-7 description which corresponds to the uppermost node in the lower-rank MPEG-7 description. The specified node is a path of a root node in the lower-rank MPEG-7 description, and is absent from the upper-rank MPEG-7 description in the related Description. The use of "XPath" makes it possible to accurately represent the position at which the lower-rank MPEG-7 description should be connected with the upper-rank MPEG-7 description without using "position (attribute position)".

The Connection Point may include "element Name (attribute element Name)". The attribute element Name represents the name of the specified node in the original MPEG-7 description which corresponds to the uppermost node in the lower-rank MPEG-7 description. Therefore, the attribute element Name can represent the name of the root node in the lower-rank MPEG-7 description. Thus, even in the case where the name of the root node in the division-resultant lower-rank MPEG-7 description differs from that of the corresponding node in the original MPEG-7 description, it is possible that the root-node name is converted back to the original name and then the lower-rank MPEG-7 description and the upper-rank MPEG-7 description are connected to reconstruct the original MPEG-7 description.

An upper-rank MPEG-7 description and lower-rank MPEG-7 descriptions may be generated individually rather than being generated by dividing an original MPEG-7 description. In this case, the child element "XPath" in the Connection Point represents or designates a specified node in an assumptive integrated MPEG-7 description which corresponds to the uppermost node in the related lower-rank MPEG-7 description (the path of the root node in the lower-rank MPEG-7 description). The attribute element Name represents the name of the specified node in the assumptive integrated MPEG-7 description which corresponds to the uppermost node in the lower-rank MPEG-7 description. Therefore, the attribute element Name can represent the name of the root node in the lower-rank MPEG-7 description. The content of the child element "XPath" in the Connection Point remains substantially the same regardless of whether an upper-rank MPEG-7 description and lower-rank MPEG-7 descriptions are generated individually or generated by dividing an original MPEG-7 description. Also, the content of the attribute element Name remains substantially the same regardless of whether an upper-rank MPEG-7 description and lower-rank MPEG-7 descriptions are generated individually or generated by dividing an original MPEG-7 description.

Each Fragment Location being a child element of the Fragment Reference is reference information designating a lower-rank MPEG-7 description which should be connected to the upper-rank MPEG-7 description in the related Description. The Fragment Location is of a data format being "uriReference". The Fragment Location has a child element named "HRef". Basically, in the case where an access unit including an upper-rank MPEG-7 description refers to a lower-rank MPEG-7 description, the child element "HRef" in the Fragment Location represents URI (uniform resource identifiers) of an access unit including the lower-rank MPEG-7 description.

In the case where an access unit including an upper-rank MPEG-7 description refers to lower-rank MPEG-7 descriptions in a common access unit as shown in Fig. 16, the Fragment Reference has a common attribute "href" representing the URI of the common access unit and being independent of and separate from the Connection Points and the Fragment Locations. The attribute "href" is common to the child elements "HRef" in the Fragment Locations. In this case, the child element "HRef" may be omitted from each Fragment Location corresponding to one lower-rank MPEG description.

Each Fragment Location has a child element named "Fragment Index" which represents a number (an identification number) for identifying a related lower-rank MPEG-7 description. Generally, serial positive integers are assigned to lower-rank MPEG-7 descriptions in a common access unit as different identification numbers respectively. Accordingly, it is possible to identify the lower-rank MPEG-7 descriptions in the common access unit.

Each Fragment Location may have "content (attribute content)" giving an outline of the content of the related lower-rank MPEG-7 description. In the case where lower-rank MPEG-7 descriptions are the same in content outline, the Fragment Reference has "common attribute content" giving the content outline and being independent of and separate from the Connection Points and the Fragment Locations. In this case, the attribute content may be omitted from each Fragment Location corresponding to one lower-rank MPEG-7 description.

In the case where the contents of lower-rank MPEG-7 descriptions have a common generic outline although being different from each other in specific outline, the common attribute content in the Fragment Reference represents the generic content outline while the attribute contents in the Fragment Locations represent the specific content outlines respectively.

Under the condition that information common to the Fragment Locations in the Fragment Reference is included in the Fragment Reference as common attribute information as previously mentioned, it is possible to decide whether or not access units including lower-rank MPEG-7 descriptions should be obtained by referring to the common attribute information without accessing the corresponding information in each of the Fragment Locations. Also, it is possible to actually obtain the access units by referring to the common attribute information without accessing the related information in each of the Fragment Locations. Therefore, the processing of the reference information is simplified. In the case where information common to the Fragment Locations in the Fragment Reference is included in the Fragment Reference as common attribute information while the corresponding information is omitted from each of the Fragment Locations, the amount of reference information is relatively small so that the access units can be efficiently transmitted.

Each Fragment Reference may have "common attribute element Name" independent of and separate from the Connection Points and the Fragment Locations. In the case where the names of the root nodes in the lower-rank MPEG-7 descriptions which are represented by the attribute element Names in the Connection Points are the same, the common attribute element Name may represent the root-node name. In this case, the attribute element Name may be omitted from each Connection Point. Thereby, the processing of the connection position information can be simplified, and the amount of the connection position information can be reduced.

The attribute information (the common attribute information) in the Fragment Reference loaded with the connection destination information is used in connecting or integrating the upper-rank MPEG-7 description and the lower-rank MPEG-7 descriptions as previously mentioned. Thereby, the processing of each Connection Point (the connection position information), the processing of each Fragment Location (the reference information), or the processing of each Connection Point and each Fragment Location in the Fragment Reference can be simplified so that the connection or integration of the upper-rank MPEG-7 description and the lower-rank MPEG-7 descriptions can be implemented at a high speed.

As in the first embodiment of this invention, an original MPEG-7 description can be reconstructed as follows. After access units are obtained, division-resultant MPEG-7 descriptions are read from the access units. In addition, information (connection position information and reference information) is read from the Fragment Reference, that is, the connection destination information store portion. The division-resultant MPEG-7 descriptions are sequentially connected on the basis of the connection position information and the reference information to reconstruct an original MPEG-7 description.

Two or more may be selected from the access units on the basis of the reference information. In other words, two or more may be selected from the division-resultant MPEG-7 descriptions on the basis of the reference information. In this case, a portion of the original MPEG-7 description is reconstructed by connecting the selected division-resultant MPEG-7 descriptions.

Access units loaded with division-resultant MPEG-7 descriptions can be transmitted. In this case, transmission control can be implemented access-unit by access-unit. Thus, it is possible to provide a high transmission efficiency.

As previously mentioned, connection position information and reference information composing information for connection are placed in the Fragment Reference, that is, the connection destination information store portion, of an access unit which is separate from the metadata store portion (Description) thereof. Accordingly, the addition of the information for connection can be implemented without operating the inner parts of structured metadata.

As in the first embodiment of this invention, the Fragment Location may have "use (attribute use)" which represents the necessity of the related lower-rank MPEG-7 description for connection with the upper-rank MPEG-7 description.

As in the first embodiment of this invention, each access unit may include an attribute "id (identification information)" store portion. The attribute "id" store portion contains "id (attribute identification information)" for the related access unit, that is, the access-unit identification information.

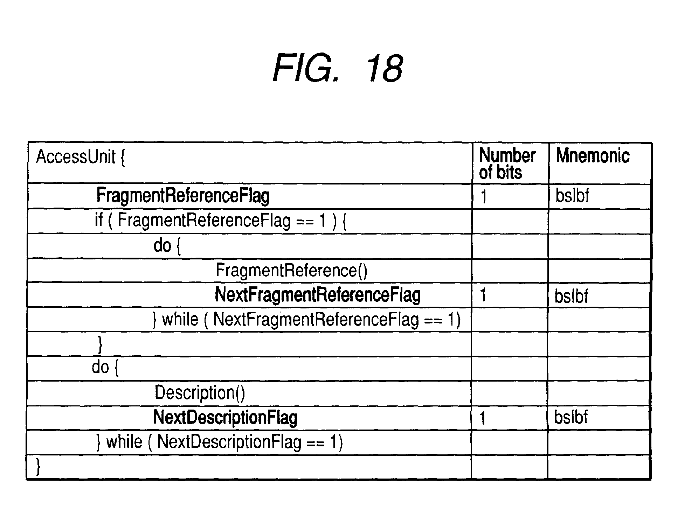

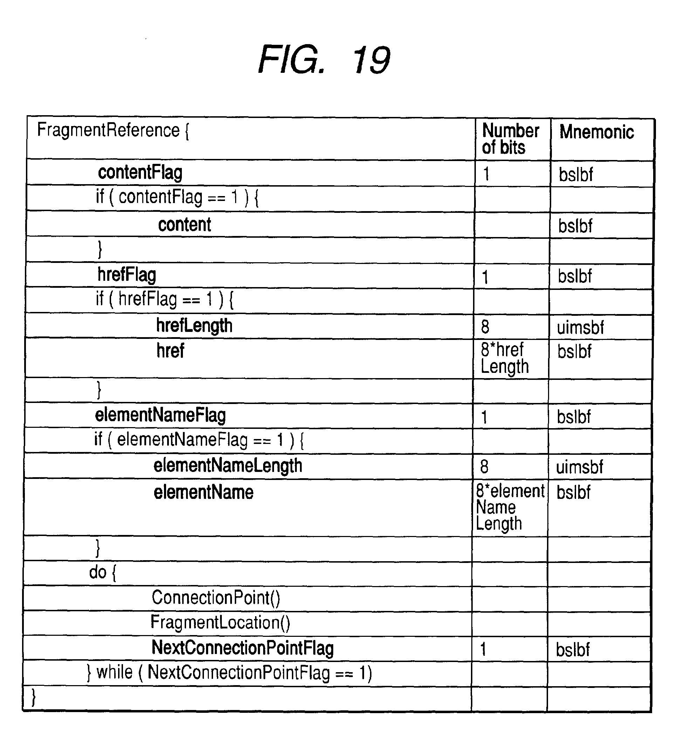

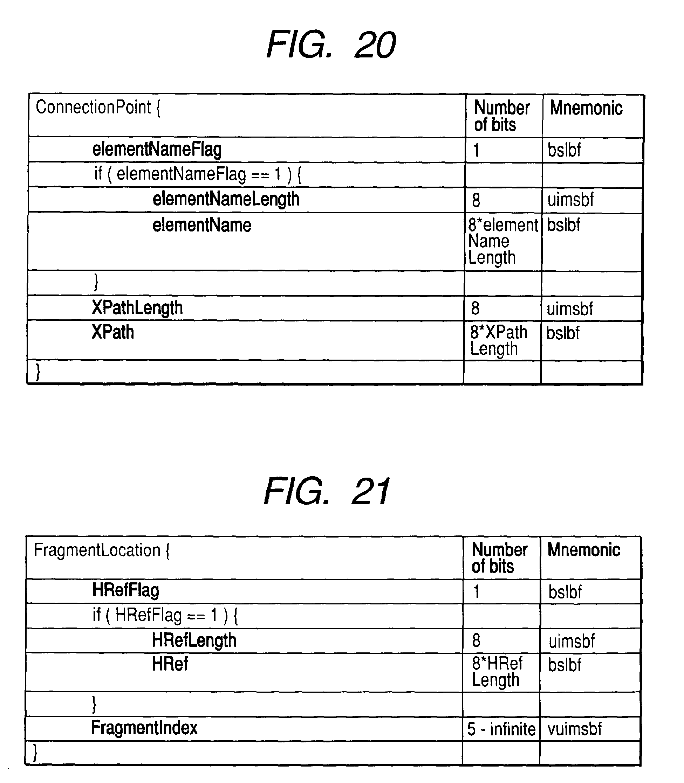

Generally, an MPEG-7 description or descriptions and various types of information ("attribute id", connection position information, reference information, and attribute information) in each access unit are represented by text data as shown in Fig. 17. An MPEG-7 description or descriptions and various types of information in each access unit may be represented by binary data. In this case, each access unit takes a binary format as shown in Fig. 18. The Fragment Reference in each access unit takes a binary format as shown in Fig. 19. Each Connection Point in the Fragment Reference takes a binary format as shown in Fig. 20. Each Fragment Location in the Fragment Reference takes a binary format as shown in Fig. 21.

### Sixth Embodiment

A sixth embodiment of this invention is similar to the fifth embodiment thereof except design changes mentioned hereafter.

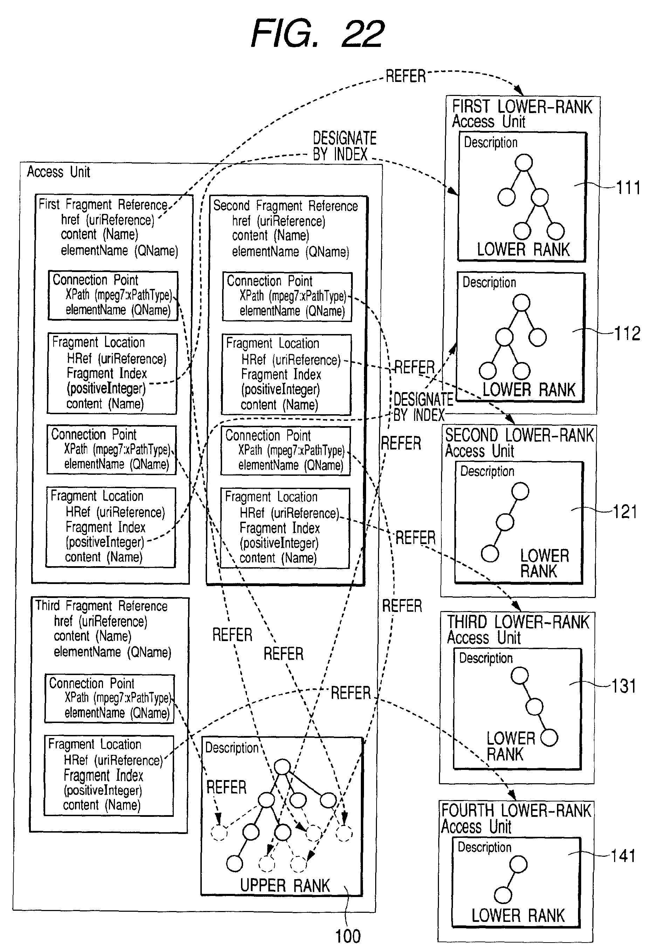

Fig. 22 shows examples of the structures of access units in the sixth embodiment of this invention which are loaded with division-resultant MPEG-7 descriptions. With reference to Fig. 22, an original MPEG-7 description is divided into an upper-rank MPEG-7 description 100 and five lower-rank MPEG-7 descriptions 111, 112, 121, 131, and 141. The upper-rank MPEG-7 description 100 is stored in an upper-rank access unit. The lower-rank MPEG-7 descriptions 111 and 112 are stored in a first lower-rank access unit. The lower-rank MPEG-7 descriptions 121, 131, and 141 are stored in second, third, and fourth lower-rank access units, respectively.

The upper-rank access unit in Fig. 22 includes a metadata store portion named "Description", and three connection destination information store portions named "first Fragment Reference", "second Fragment Reference", and "third Fragment Reference" respectively. The first lower-rank access unit in Fig. 22 includes two Descriptions. Each of the second, third, and fourth lower-rank access units in Fig. 22 includes one Description. Each Description stores a related division-resultant MPEG-7 description.

The first, second, and third Fragment References have child elements of two types which are named "Connection Point" and "Fragment Location" respectively. Generally, an upper-rank access unit has one or more sets each having Connection Point and Fragment Location, and each corresponding to one lower-rank MPEG-7 description to be connected with the division-resultant MPEG-7 description in the related Description. In Fig. 22, since the five lower-rank MPEG-7 descriptions 111, 112, 121, 131, and 141 exist, the upper-rank access unit has five sets each having Connection Point and Fragment Location. Each Connection point is connection position information relating to the upper-rank MPEG-7 description 100 stored in the related Description. Each Fragment Location is reference information designating a related lower-rank MPEG-7 description (111, 112, 121, 131, or 141) which should be connected to the upper-rank MPEG-7 description 100 in the related Description.

A child element "HRef" in each Fragment Location represents URI (uniform resource identifiers) of an access unit including the related lower-rank MPEG-7 description.

In Fig. 22, since both the lower-rank MPEG-7 descriptions 111 and 112 are in the first lower-rank access unit, the child elements "HRef" in the Fragment Locations corresponding to the lower-rank MPEG-7 descriptions 111 and 112 are the same. The sets of the Connection Points and the Fragment Locations corresponding to the lower-rank MPEG-7 descriptions 111 and 112 are in the first Fragment Reference, and a common attribute "href" in the first Fragment Reference represents the URI of the first lower-rank access unit. In this case, the child element "HRef" may be omitted from each Fragment Location corresponding to one lower-rank MPEG description.

Child elements "Fragment Index" in the Fragment Locations corresponding to the lower-rank MPEG-7 descriptions 111 and 112 represent numbers (identification numbers) for identifying the lower-rank MPEG-7 descriptions 111 and 112 respectively. Generally, serial positive integers are assigned to lower-rank MPEG-7 descriptions in a common access unit as different identification numbers respectively. Accordingly, it is possible to identify the lower-rank MPEG-7 descriptions 111 and 112 in the first lower-rank access unit.

It is assumed that "content (attribute content)" in the Fragment Location corresponding to the lower-rank MPEG-7 description 121 and "content (attribute content)" in the Fragment Location corresponding to the lower-rank MPEG-7 description 131 are the same. Furthermore, it is assumed that "attribute element Name" in the Connection Point corresponding to the lower-rank MPEG-7 description 121 and "attribute element Name" in the Connection Point corresponding to the lower-rank MPEG-7 description 131 are the same. In these cases, the sets of the Connection Points and the Fragment Locations corresponding to the lower-rank MPEG-7 descriptions 121 and 131 are stored in the second Fragment Reference. In addition, "common attribute content" in the second Fragment Reference represents the same information as that in the two attribute contents while "common attribute element Name" in the second Fragment Reference represents the same information as that in the two attribute element Names. In this case, the attribute content may be omitted from each Fragment Location corresponding to one lower-rank MPEG-7 description. Also, the attribute element Name may be omitted from each Connection Point corresponding to one lower-rank MPEG-7 description.

In the case where the contents of the lower-rank MPEG-7 descriptions 121 and 131 have a common generic outline although being different from each other in specific outline, the common attribute content in the second Fragment Reference may represent the generic content outline while the attribute contents in the Fragment Locations therein may represent the specific content outlines respectively.

In Fig. 22, the set of the Connection Point and the Fragment Location corresponding to the lower-rank MPEG-7 description 141 does not have any commonality with respect to the sets of the Connection Points and the Fragment Locations corresponding to the other lower-rank MPEG-7 descriptions. Therefore, the set of the Connection Point and the Fragment Location corresponding to the lower-rank MPEG-7 description 141 is stored in an exclusive Fragment Reference, that is, the third Fragment Reference.

### Seventh Embodiment

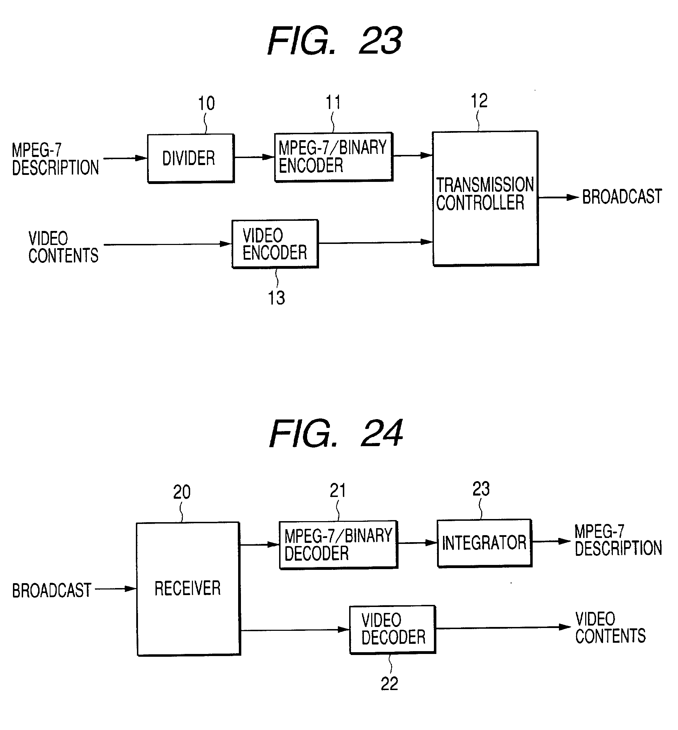

Fig. 23 shows an MPEG-7 transmission system according to a seventh embodiment of this invention. The system in Fig. 23 is designed to transmit an MPEG-7 description or descriptions together with video contents in digital television broadcast.

The system in Fig. 23 includes a divider 10 receiving an original MPEG-7 description being an XML document. The divider 10 includes a computer which operates in accordance with a control program. The control program is designed to enable the divider 10 to execute operation steps indicated hereafter. The divider 10 divides the original MPEG-7 description into a suitable number of fragments (division-resultant MPEG-7 descriptions) according to predetermined rules. Regarding each of the fragments, the divider 10 generates, in accordance with the conditions of dividing the original MPEG-7 description, "Fragment Reference" and attribute identification information for the reconstruction of the original MPEG-7 description. The divider 10 adds "Fragment Reference" and attribute identification information to each fragment to complete an access unit in Fig. 3. The divider 10 outputs access units to an MPEG-7/binary encoder 11. Each of the access unit contains a division-resultant MPEG-7 description.

Regarding each of the fragments, the divider 10 may generate "Fragment Reference", attribute identification information, and "Update Command" for the reconstruction of the original MPEG-7 description. In this case, the divider 10 adds "Fragment Reference", attribute identification information, and "Update Command" to each fragment to complete an access unit in Fig. 9. Alternatively, the divider 10 may generate an access unit in Fig. 16 or Fig. 22.

The MPEG-7/binary encoder 11 receives access units from the divider 10. Each of the received access units contains a division-resultant MPEG-7 description. The MPEG-7/binary encoder 11 encodes each of the received access units into a binary MPEG-7 access unit. The MPEG-7/binary encoder 11 outputs binary MPEG-7 access units to a transmission controller 12.

The system of Fig. 23 further includes a video encoder 13 receiving video contents. The video encoder 13 encodes the received video contents into encoding-resultant video data of, for example, an MPEG-2 format. The video encoder 13 outputs the encoding-resultant video data to the transmission controller 12.

The transmission controller 12 includes a multiplexer. Thus, the transmission controller 12 multiplexes the binary MPEG-7 access units and the encoding-resultant video data into a multiplexing-resultant signal. The transmission controller 12 transmits or broadcasts the multiplexing-resultant signal.

The transmission controller 12 includes a computer which operates in accordance with a control program. The control program is designed to enable the transmission controller 12 to execute operation steps indicated later. The transmission controller 12 implements the transmission of the binary MPEG-7 access units according to a carousel system. The transmission controller 12 controls the period and frequency of carousel transmission on an access-unit by access-unit basis according to predetermined rules.

For example, the transmission controller 12 decides the degree of the importance of information in each binary MPEG-7 access unit. The transmission controller 12 increases the period of carousel transmission and the frequency thereof as the decided importance degree rises. In addition, the transmission controller 12 decides the rank (the layer) to which structured metadata in each binary MPEG-7 access unit belongs. The transmission controller 12 increases the period of carousel transmission and the frequency thereof as the decided rank rises.

### Eighth Embodiment

Fig. 24 shows an MPEG-7 reception system according to an eighth embodiment of this invention. The system in Fig. 24 is designed to receive a multiplexing-resultant signal transmitted or broadcasted by the system of Fig. 23.

The system in Fig. 24 includes a receiver 20 which receives a broadcasted multiplexing-resultant signal. The receiver 20 includes a demultiplexer. Thus, the receiver 20 demultiplexes the received multiplexing-resultant signal into binary MPEG-7 access units and encoding-resultant video data. The receiver 20 outputs the binary MPEG-7 access units to an MPEG-7/binary decoder 21. The receiver 20 outputs the encoding-resultant video data to a video decoder 22.

The MPEG-7/binary decoder 21 decodes each of the binary MPEG-7 access units into an XML-format MPEG-7 access unit, that is, a textual-format MPEG-7 access unit. The MPEG-7/binary decoder 21 outputs textual-format MPEG-7 access units to an integrator 23.

The integrator 23 includes a computer which operates in accordance with a control program. The control program is designed to enable the integrator 23 to execute operation steps indicated hereafter. The integrator 23 extracts division-resultant MPEG-7 descriptions from the textual-format MPEG-7 access units. The integrator 23 refers to integration-purpose information (connection position information and reference information) in "Fragment Reference" in each of the textual-format MPEG-7 access units. The integrator 23 connects or integrates the division-resultant MPEG-7 descriptions to reconstruct an original MPEG-7 description in accordance with the integration-purpose information. The integrator 23 outputs the reconstructed original MPEG-7 description.

Reference information in "Fragment Reference" which relates to lower-rank structured metadata has information ("attribute use" and "Necessity") representing the necessity of the connection of the lower-rank structured metadata to upper-rank structured metadata. The integrator 23 may decide whether or not the integration for the reconstruction is allowed on the basis of at least one of (1) the above-mentioned information ("attribute use" and "Necessity") and (2) the information relating to the content of the lower-rank structured metadata.

The video decoder 22 decodes the encoding-resultant video data into original video contents. The video decoder 22 outputs the video contents.

### Ninth Embodiment

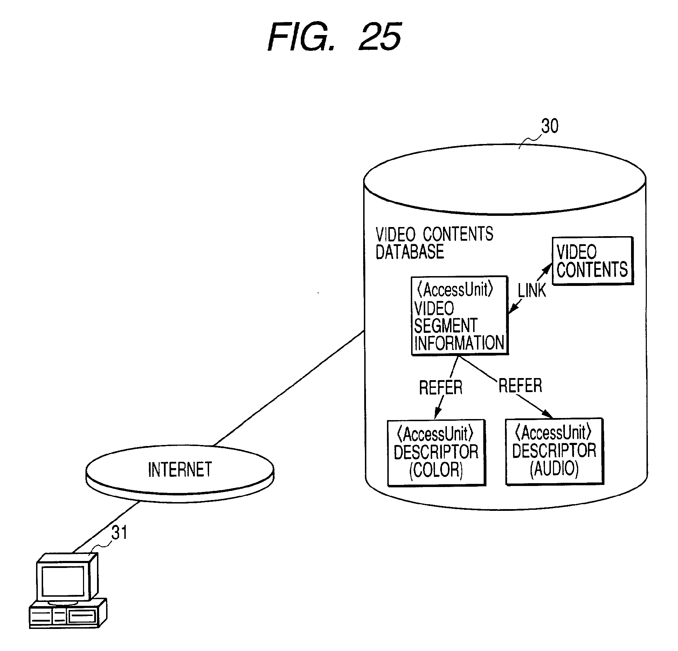

Fig. 25 shows a video contents search system according to a ninth embodiment of this invention. The system in Fig. 25 uses the Internet. In the system of Fig. 25, a server 30 and a user-side computer 31 can be connected via the Internet.

The server 30 has a storage loaded with a video database (a video contents database) holding a plurality of video contents and MPEG-7 descriptions corresponding to the video contents respectively. As in one of the first, second, third, fourth, fifth, and sixth embodiments of this invention, each of the original MPEG-7 descriptions is divided and the division-resultant MPEG-7 descriptions are placed in access units. The access units include an access unit containing video segment information being a division-resultant upper-rank MPEG-7 description, and an access unit containing descriptors in each field such as "color" or "audio" which compose a division-resultant lower-rank MPEG-7 description.

Each video-segment-information access unit has a plurality of "Fragment References". Each of "Fragment References" stores connection position information and reference information. Each of "Fragment References" refers to the descriptor access unit in the related field, and includes added "attribute content" giving an outline of the content of the lower-rank MPEG-7 description which should be referred to.

The user-side computer 31 can access the video database in the server 30 via the Internet to search the video contents for desired one. Specifically, the user-side computer 31 can selects arbitrary one among the MPEG-7 access units in the video database. The selected MPEG-7 access unit is transferred from the server 30 to the user-side computer 31 via the Internet before being downloaded thereinto.

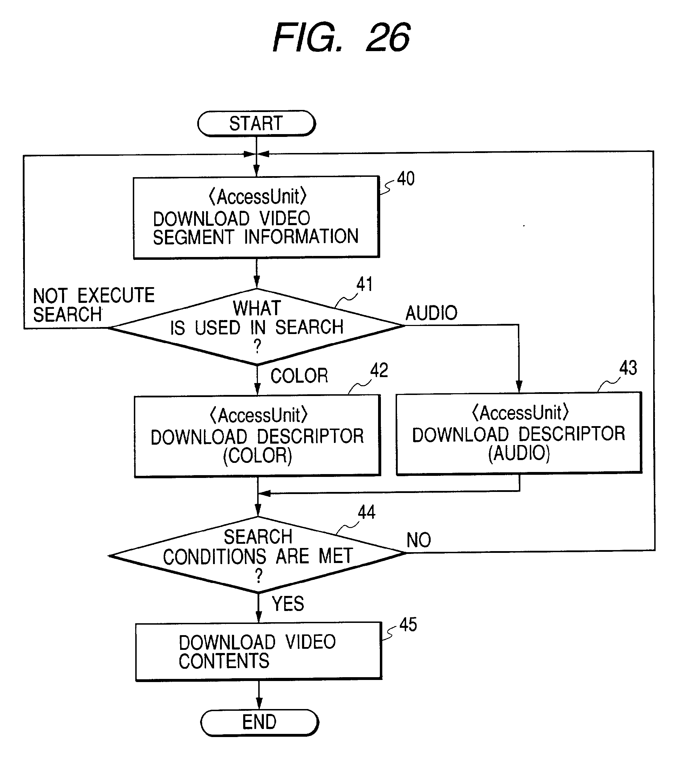

Fig. 26 is a flowchart of an application program for the user-side computer 31 which relates to video contents search via the Internet. As shown in Fig. 26, a first step 40 of the application program accesses the video contents database in the server 30 via the Internet. The step 40 requests the server 30 to transfer a video-segment-information access unit (corresponding to one video content) from the video contents database. The step 40 receives or obtains the requested video-segment-information access unit. Thus, the requested video-segment-information access unit is downloaded into the user-side computer 31.

A step 41 following the step 40 accepts user's command designating a factor (a field) used for search. The step 41 decides which of "color", "audio", and "not execute search" the factor (the field) designated by the user's command corresponds to. When the designated factor corresponds to "color", the program advances from the step 41 to a step 42. When the designated factor corresponds to "audio", the program advances from the step 41 to a step 43. When the designated factor corresponds to "not execute search", the program returns from the step 41 to the step 40.

The step 42 fetches "attribute contents" from "Fragment References" in the video-segment-information access unit. As previously mentioned, each of "attribute contents" gives an outline of the content of a related lower-rank MPEG-7 description which should be referred to. The step 42 uses "attribute contents" in determining a descriptor access unit including descriptors corresponding to the designated factor ("color") used for search. The step 42 accesses the server 30 via the Internet. The step 42 requests the server 30 to transfer the determined descriptor access unit, that is, the "color" descriptor access unit, from the video contents database. The step 42 receives or obtains the requested "color" descriptor access unit. Thus, the requested "color" descriptor access unit is downloaded into the user-side computer 31. After the step 42, the program advances to a step 44.

The step 43 fetches "attribute contents" from "Fragment References" in the video-segment-information access unit. The step 43 uses "attribute contents" in determining a descriptor access unit including descriptors corresponding to the designated factor ("audio") used for search. The step 43 accesses the server 30 via the Internet. The step 43 requests the server 30 to transfer the determined descriptor access unit, that is, the "audio" descriptor access unit, from the video contents database. The step 43 receives or obtains the requested "audio" descriptor access unit. Thus, the requested "audio" descriptor access unit is downloaded into the user-side computer 31. After the step 43, the program advances to the step 44.

In the case where the video-segment-information access unit does not have "Fragment Reference" referring to a descriptor access unit including descriptors corresponding to the designated factor, later steps for the present video content are skipped and the program proceeds to steps for a next video content.

The step 44 accepts information about search conditions set by the user. The step 44 collates an MPEG-7 description in the downloaded descriptor access unit with the search conditions. The step 44 decides whether or not the MPEG-7 description meets the search conditions. When the MPEG-7 description meets the search conditions, the program advances from the step 44 to a step 45. Otherwise, the program returns from the step 44 to the step 40 for the processing of a next video content.

The step 45 accesses the server 30 via the Internet. The step 45 requests the server 30 to transfer, from the video contents database, a video content corresponding to the MPEG-7 description meeting the search conditions. The step 45 receives or obtains the requested video content. Thus, the requested video content is downloaded into the user-side computer 31. After the step 45, the current execution cycle of the application program ends.

### Tenth Embodiment

A tenth embodiment of this invention is similar to one of the first to ninth embodiments thereof except for the design change as follows. The tenth embodiment of this invention is designed to handle structured metadata of a tree structure which represent an electronic program guide (EPG) rather than audio-visual contents. The EPG includes an information pieces indicating broadcasted program titles, broadcasting dates, broadcasting channels, and broadcasted program outlines.

### Eleventh Embodiment

An eleventh embodiment of this invention is similar to one of the first to tenth embodiments thereof except for design changes mentioned hereafter. According to the eleventh embodiment of this invention, computer programs for implementing the division of an original MPEG-7 description and the integration of lower-rank MPEG-7 descriptions in one of the first to tenth embodiments thereof are distributed to users via the Internet or CD-ROMs. Each of the users installs the distributed computer programs into a user-side computer or another apparatus. The user-side computer or the other apparatus is employed as a dividing apparatus and an integrating apparatus.

### Advantages

The first to eleventh embodiments of this invention have the following features and advantages.
(A) In a transmission side, blocks of structured metadata are placed in units (access units) respectively. The transmission side transmits the units with the blocks of the structured metadata. Thus, the transmission of the structured metadata can be controlled unit by unit. Accordingly, it is possible to provide a high efficiency of the transmission of the structured metadata. A reception side receives the units with the blocks of the structured metadata. In the event that the reception side fails to successfully receive one of the units, the reception failure does not adversely affect the reception of the other units. In that case, the reception side requires the transmission side to retransmit only the necessary unit.
(B) Identification information pieces are added to the units, respectively. The identification information pieces are designed to identify the units. The units with the identification information pieces are transmitted. Thus, in a transmission system such as a digital television broadcast system, the units can be identified by referring to the identification information pieces therein.
(C) Upper-rank information and lower-rank information (upper-layer information and lower-layer information) representing a content can be separately transmitted.
(D) A metadata store portion contains first structured metadata. A connection destination information store portion separate from the metadata store portion contains reference information and connection position information composing information for connection of the first structured metadata with second structured metadata. Accordingly, the addition of the information for connection can be implemented without operating the inner parts of the first structured metadata.
(E) A first unit stores first structured metadata. The first unit contains connection position information representing a point (a connection point) in the first structured metadata to which second structured metadata should be connected. The connection position information includes information designating a node in the first structured metadata, and information designating a position of connection of the second structured metadata with respect to the designated node. In this case, it is easy to accurately designate the connection point by the connection position information.
(F) A first unit stores first structured metadata to which second structured metadata should be connected. The first unit contains reference information relating to the second structured metadata. The reference information includes information relating to the outline of the content of the second structured metadata. In this case, it is possible to know the outline of the content of the second structured metadata without actually obtaining the second structured metadata. Furthermore, a decision as to whether or not the second structured metadata should be obtained can be implemented without actually accessing the second structured metadata.
(G) The reference information in the first unit which relates to the second structured metadata includes information representing the necessity of the connection or integration of the second structured metadata with the first structured metadata. In this case, it can be mandatory to obtain the second structured metadata. The second structured metadata contain data for protecting the copyright on the first structured metadata. In this case, the copyright on the first structured metadata can be reliably protected.
(H) Identification information for identifying a unit, first structured metadata, second structured metadata, connection position information, and reference information relating to the second structured metadata are of a textual format. In this case, they can be easily understood by a user. Furthermore, they can be easily edited. Also, they are suited for transmission via the Internet.
(I) Identification information for identifying a unit, first structured metadata, second structured metadata, connection position information, and reference information relating to the second structured metadata are of a binary format. In this case, the volume of them is smaller than that of the corresponding textual-format information. Therefore, it is possible to improve the transmission efficiency. Furthermore, the binary-format information is suited for digital television broadcast and distribution to mobile terminals.
(J) The first structured metadata and the second structured metadata result from dividing an original structured metadata. There are assumptive structured metadata being of a tree structure and being caused by the integration of the first and second structured metadata. The connection position information in the first unit includes information representing a node in the original structured metadata or the assumptive structured metadata which corresponds to the uppermost node in the second structured metadata. In this case, a smaller amount of information can accurately represent a position in the first structured metadata to which the second structured metadata should be connected.
(K) The first structured metadata and the second structured metadata result from dividing an original structured metadata. There are assumptive structured metadata being of a tree structure and being caused by the integration of the first and second structured metadata. The connection position information in the first unit includes name information relating to the name of a node in the original structured metadata or the assumptive structured metadata which corresponds to the uppermost node in the second structured metadata. Thus, even in the case where the name of the uppermost node in the second structured metadata differs from the name of the corresponding node in the original structured metadata or the assumptive structured metadata, it is possible that the uppermost-node name is converted back to the original name and then the first and second structured metadata are connected or integrated.
(L) A first unit stores an upper-rank structured metadata. There are two or more blocks of lower-rank structured metadata to be connected with the upper-rank structured metadata. Connection position information pieces represent points in the upper-rank structured metadata to which the blocks of the lower-rank structured metadata should be connected, respectively. The connection position information pieces are in the connection destination information store portion of the first unit. Common connection position information is defined as being in common to the connection position information pieces. Reference information pieces relate to the blocks of the lower-rank structured metadata, respectively. The reference information pieces are in the connection destination information store portion of the first unit. Common reference information is defined as being in common to the reference information pieces. The connection destination information store portion in the first unit contains at least one of the common connection position information and the common reference information as common attribute information. At the time of the integration of the upper-rank structured metadata and the lower-rank structured metadata, the common attribute information is used in preference to the connection position information pieces and the reference information pieces. Thereby, the processing of the connection position information pieces and the reference information pieces in the connection destination information store portion of the first unit can be simplified. Furthermore, the connection or integration of the upper-rank structured metadata and the lower-rank structured metadata can be implemented at a high speed.

## Claims

1. A method of integrating structured metadata, comprising the steps of:
using a first unit including a first metadata store portion and a connection destination information store portion, the first metadata store portion containing first structured metadata, the connection destination information store portion containing connection position information and reference information, the connection position information representing a connection point in the first structured metadata to which second structured metadata should be connected, the reference information relating to the second structured metadata and including information relating to a place where the second structured metadata exist;
using a second unit including a second metadata store portion containing the second structured metadata; and
integrating the first structured metadata and the second structured metadata into third structured metadata of a tree structure in response to the connection position information and the reference information contained in the connection destination information store portion of the first unit.

2. A method as recited in claim 1, wherein the connection position information includes information designating a node in the first structured metadata, and information designating a connection position of the second structured metadata with respect to the designated node.

3. A method of integrating structured metadata, comprising the steps of:
using a first unit including a first metadata store portion and a connection destination information store portion, the first metadata store portion containing first structured metadata, the connection destination information store portion containing connection position information and reference information, the connection position information representing a node in an assumptive integration-resultant structured metadata which corresponds to an uppermost node in second structured metadata, the reference information relating to the second structured metadata and including information relating to a place where the second structured metadata exist;
using a second unit including a second metadata store portion containing the second structured metadata; and
integrating the first structured metadata and the second structured metadata into third structured metadata of a tree structure in response to the connection position information and the reference information contained in the connection destination information store portion of the first unit.

4. A method as recited in claim 1, 2 or 3 wherein the reference information includes information relating to a content of the second structured metadata.

5. A method as recited in claim 4 further comprising the step of deciding whether or not the first structured metadata and the second structured metadata should be integrated in response to the information relating to the content of the second structured metadata.

6. A method as recited in claim 1, 2, 3, 4 or 5 wherein the reference information includes information representing a necessity of integration with the first structured metadata.

7. A method as recited in claim 6, further comprising the step of deciding whether or not the first structured metadata and the second structured metadata should be integrated in response to the information representing the necessity of integration with the first structured metadata.

8. A method as recited in any one of the claims 1 to 7, wherein first and second identification information pieces for identifying the first and second units are added to the first and second units, respectively.

9. A method as recited in claim 8, wherein the information relating to the place where the second structured metadata exist is based on the second identification information piece for identifying the second unit.

10. A method as recited in any one of claims 1 to 9, wherein the first structured metadata, the second structured metadata, the connection position information, and the reference information are of a textual format.

11. A method as recited in claim 10 when dependent on claim 8 or 9, wherein the first and second identification information pieces are of a textual format.

12. A method as recited in any one of claims 1 to 9, wherein the first structured metadata, the second structured metadata, the connection position information, and the reference information are of a binary format.

13. A method as recited in claim 12 when dependent on claim 8 or 9, wherein the first and second identification information pieces are of a binary format.

14. A method as recited in any one of the preceding claims, wherein the third structured metadata represent an electronic program guide.

15. A method as recited in any one of the preceding claims, wherein the connection position information includes name information relating to a name of a node in an assumptive integration-resultant structured metadata which corresponds to an uppermost node in the second structured metadata.

16. A method as recited in claim 15, further comprising the step of converting a name of the uppermost node in the second structured metadata into the name of the node in the assumptive integration-resultant structured metadata before the first structured metadata and the second structured metadata are integrated.

17. A method of integrating structured metadata, comprising the steps of:
using a first unit including a first metadata store portion and a connection destination information store portion, the first metadata store portion containing first structured metadata, the connection destination information store portion containing first connection position information and first reference information, the first connection position information representing a first connection point in the first structured metadata to which second structured metadata should be connected, the first reference information relating to the second structured metadata and including information relating to a place where the second structured metadata exist, the connection destination information store portion containing second connection position information and second reference information, the second connection position information representing a second connection point in the first structured metadata to which third structured metadata should be connected, the second reference information relating to the third structured metadata and including information relating to a place where the third structured metadata exist, the connection destination information store portion containing at least one of (1) first common information and (2) second common information as common attribute information, the first common information being common to the first connection position information and the second connection position information, the second common information being common to the first reference information and the second reference information;
using at least one of second and third units, the second unit including a second metadata store portion containing either the second structured metadata or a set of the second structured metadata and the third structured metadata, the third unit including a third metadata store portion containing the third structured metadata; and
integrating the first structured metadata, the second structured metadata, and the third structured metadata into fourth structured metadata of a tree structure in response to the common attribute information contained in the connection destination information store portion of the first unit.

18. A method as recited in claim 17 further comprising the step of using the common attribute information in preference to the first connection position information, the first reference information, the second connection position information, and the second reference information for the integration of the first structured metadata, the second structured metadata, and the third structured metadata.

19. A method of integrating structured metadata, comprising the steps of:
using a first unit including a first metadata store portion and a connection destination information store portion, the first metadata store portion containing first structured metadata, the connection destination information store portion containing first connection position information and first reference information, the first connection position information representing a first node in an assumptive integration-resultant structured metadata which corresponds to an uppermost node in second structured metadata, the first reference information relating to the second structured metadata and including information relating to a place where the second structured metadata exist, the connection destination information store portion containing second connection position information and second reference information, the second connection position information representing a second node in the assumptive integration-resultant structured metadata which corresponds to an uppermost node in third structured metadata, the second reference information relating to the third structured metadata and including information relating to a place where the third structured metadata exist, the connection destination information store portion containing at least one of (1) first common information and (2) second common information as common attribute information, the first common information being common to the first connection position information and the second connection position information, the second common information being common to the first reference information and the second reference information;
using at least one of second and third units, the second unit including a second metadata store portion containing either the second structured metadata or a set of the second structured metadata and the third structured metadata, the third unit including a third metadata store portion containing the third structured metadata; and
integrating the first structured metadata, the second structured metadata, and the third structured metadata into fourth structured metadata of a tree structure in response to the common attribute information contained in the connection destination information store portion of the first unit.

20. A method as recited in claim 19 further comprising the step of using the common attribute information in preference to the first connection position information, the first reference information, the second connection position information, and the second reference information for the integration of the first structured metadata, the second structured metadata, and the third structured metadata.

21. A method of transmitting structured metadata, comprising the steps of:
using a first unit including a first metadata store portion and a connection destination information store portion, the first metadata store portion containing first structured metadata, the connection destination information store portion containing connection position information and reference information, the connection position information representing a connection point in the first structured metadata to which second structured metadata should be connected, the second structured metadata being subordinate to the first structured metadata, the reference information relating to the second structured metadata and including information relating to a place where the second structured metadata exist, the first unit containing first identification information for identifying the first unit;
using a second unit including a second metadata store portion containing the second structured metadata, the second unit containing second identification information for identifying the second unit; and
transmitting the first and second units.

22. A method as recited in claim 21, further comprising the step of controlling the transmission of the first and second units on a unit-by-unit basis.

23. A method as recited in claim 21 or 22, wherein the first structured metadata and the second structured metadata compose third structured metadata being of a tree structure and representing an electronic program guide.

24. A method as recited in claim 21, 22 or 23, wherein the first structured metadata and the second structured metadata result from dividing original structured metadata, and the connection position information includes name information relating to a name of a node in the original structured metadata which corresponds to an uppermost node in the second structured metadata.

25. A method as recited in claim 21, 22, 23 or 24, wherein the connection position information includes name information relating to a name of a node in an assumptive integration-resultant structured metadata which corresponds to an uppermost node in the second structured metadata.

26. A method of transmitting first structured metadata and second structured metadata resulting from dividing original structured metadata, the second structured metadata being subordinate to the first structured metadata, the method comprising the steps of:
using a first unit including a first metadata store portion and a connection destination information store portion, the first metadata store portion containing the first structured metadata, the connection destination information store portion containing connection position information and reference information, the connection position information representing a node in the original structured metadata which corresponds to an uppermost node in the second structured metadata, the reference information relating to the second structured metadata and including information relating to a place where the second structured metadata exist;
using a second unit including a second metadata store portion containing the second structured metadata; and
transmitting the first and second units.

27. A method as recited in claim 26, wherein the connection position information includes name information relating to a name of the node in the original structured metadata which corresponds to the uppermost node in the second structured metadata.

28. A method of transmitting structured metadata, comprising the steps of:
using a first unit including a first metadata store portion and a connection destination information store portion, the first metadata store portion containing first structured metadata, the connection destination information store portion containing connection position information and reference information, the connection position information representing a node in an assumptive integration-resultant structured metadata which corresponds to an uppermost node in second structured metadata, the second structured metadata being subordinate to the first structured metadata, the reference information relating to the second structured metadata and including information relating to a place where the second structured metadata exist;
using a second unit including a second metadata store portion containing the second structured metadata; and
transmitting the first and second units.

29. A method as recited in claim 28, wherein the connection position information includes name information relating to a name of the node in the assumptive integration-resultant structured metadata which corresponds to the uppermost node in the second structured metadata.

30. A method as recited in claim 26, 27, 28 or 29, further comprising the step of controlling the transmission of the first and second units on a unit-by-unit basis.

31. A method as recited in claim 26, 27, 28, 29 or 30, wherein the first structured metadata and the second structured metadata compose third structured metadata being of a tree structure and representing an electronic program guide.

32. A method of dividing structured metadata, comprising the steps of:
dividing original structured metadata of a tree structure into first division-resultant structured metadata and second division-resultant structured metadata, the original structured metadata representing a content;
generating a first unit including a first metadata store portion and a connection destination information store portion, the first metadata store portion containing the first division-resultant structured metadata, the connection destination information store portion containing connection position information and reference information, the connection position information representing a connection point in the first division-resultant structured metadata to which the second division-resultant structured metadata should be connected, the reference information relating to the second division-resultant structured metadata and including information relating to a place where the second division-resultant structured metadata exist; and
generating a second unit including a second metadata store portion containing the second division-resultant structured metadata.

33. A method as recited in claim 32, wherein the connection position information includes name information relating to a name of a node in the original structured metadata which corresponds to an uppermost node in the second division-resultant structured metadata.

34. A method of dividing structured metadata, comprising the steps of:
dividing original structured metadata of a tree structure into first division-resultant structured metadata, second division-resultant structured metadata, and third division-resultant structured metadata, the original structured metadata representing a content;
generating a first unit including a first metadata store portion and a connection destination information store portion, the first metadata store portion containing the first division-resultant structured metadata, the connection destination information store portion containing first connection position information and first reference information, the first connection position information representing a first connection point in the first division-resultant structured metadata to which the second division-resultant structured metadata should be connected, the first reference information relating to the second division-resultant structured metadata and including information relating to a place where the second division -resultant structured metadata exist, the connection destination information store portion containing second connection position information and second reference information, the second connection position information representing a second connection point in the first division-resultant structured metadata to which the third division-resultant structured metadata should be connected, the second reference information relating to the third division-resultant structured metadata and including information relating to a place where the third division-resultant structured metadata exist, the connection destination information store portion containing at least one of (1) first common information and (2) second common information as common attribute information, the first common information being common to the first connection position information and the second connection position information, the second common information being common to the first reference information and the second reference information; and
generating at least one of second and third units, the second unit including a second metadata store portion containing either the second division-resultant structured metadata or a set of the second division-resultant structured metadata and the third division-resultant structured metadata, the third unit including a third metadata store portion containing the third division-resultant structured metadata.

35. A method of dividing structured metadata, comprising the steps of:
dividing original structured metadata of a tree structure into first division-resultant structured metadata and second division-resultant structured metadata, the original structured metadata representing a content;
generating a first unit including a first metadata store portion and a connection destination information store portion, the first metadata store portion containing the first division-resultant structured metadata, the connection destination information store portion containing connection position information and reference information, the connection position information representing a node in the original structured metadata which corresponds to an uppermost node in the second division-resultant structured metadata, the reference information relating to the second division-resultant structured metadata and including information relating to a place where the second division-resultant structured metadata exist; and
generating a second unit including a second metadata store portion containing the second division-resultant structured metadata.

36. A method as recited in claim 35, wherein the connection position information includes name information relating to a name of the node in the original structured metadata which corresponds to the uppermost mode in the second division-resultant structured metadata.

37. A method of dividing structured metadata, comprising the steps of:
dividing original structured metadata of a tree structure into first division-resultant structured metadata, second division-resultant structured metadata, and third division-resultant structured metadata, the original structured metadata representing a content;
generating a first unit including a first metadata store portion and a connection destination information store portion, the first metadata store portion containing the first division-resultant structured metadata, the connection destination information store portion containing first connection position information and first reference information, the first connection position information representing a first node in the original structured metadata which corresponds to an uppermost node in the second division-resultant structured metadata, the first reference information relating to the second division-resultant structured metadata and including information relating to a place where the second division-resultant structured metadata exist, the connection destination information store portion containing second connection position information and second reference information, the second connection position information representing a second node in the original structured metadata which corresponds to an uppermost node in the third division-resultant structured metadata, the second reference information relating to the third division-resultant structured metadata and including information relating to a place where the third division-resultant structured metadata exist, the connection destination information store portion containing at least one of (1) first common information and (2) second common information as common attribute information, the first common information being common to the first connection position information and the second connection position information, the second common information being common to the first reference information and the second reference information; and
generating at least one of second and third units, the second unit including a second metadata store portion containing either the second division-resultant structured metadata or a set of the second division-resultant structured metadata and the third division-resultant structured metadata, the third unit including a third metadata store portion containing the third division-resultant structured metadata.

38. A method as recited in any one of claims 32 to 37, wherein the original structured metadata represent an electronic program guide.

39. A computer program comprising program code means that, when executed on a computer system, instruct the computer system to perform the steps of any one of the preceding claims.
